# EUROPEAN PATENT APPLICATION

(11) **EP 4 588 870 A1**
(43) Date of publication of application: **23.07.2025**
(21) Application number: 25152625.7
(22) Date of filing: 17.01.2025
(51) Int. Cl.: B65G 67/08, B65G 67/20, B65G 67/24

(54) **LOADING OBJECTS INTO A STORAGE AREA IN AN AUTOMATED OR SEMI-AUTOMATED MANNER**

(30) Priority: 19.01.2024 US 202463622971 P
(71) Applicant: United Parcel Service Of America, Inc., Atlanta, GA 30328 (US)
(72) Inventor: MUHANDIRAMLAGE, Dulmini Yashodha Dissanayake, Atlanta, GA (US); XU, Jing, Brookhaven, GA (US); GIL, Julio, 5504TB Veldhoven (NL)
(74) Representative: Zacco Sweden AB

(57) **Abstract**

In general, various embodiments of the present disclosure provide for loading objects into a storage area in an automated or semi-automated manner as well as systems, methods, apparatuses, and computer-program products therefor. These embodiments may be implemented in storage areas that are stationary, and/or in storage areas that move, and may be used to transfer, route, and/or organize objects based at least in part on their designated destinations. In addition, various embodiments of the disclosure may be utilized in a logistics network to increase the efficiency, capacity, and/or precision of object handling in a logistics network operation, among other benefits.

## Description

### CROSS REFERENCE TO RELATED APPLICATIONS

This application claims priority from U.S. Provisional Patent Application Ser. No. 63/622,971, filed January 19, 2024, the disclosure of which is hereby incorporated herein by reference in its entirety.

### BACKGROUND

Delivery service organizations (such as, for example, United Parcel Service) often utilize various storage areas for storing objects, such as parcels, during processing of the objects through the organizations' logistics networks. For example, a delivery service organization may utilize various storage areas such as a warehouse space at a routing facility, a storage car of a train, a cargo area of a ship and/or motor vehicle, and/or the like in processing objects through the delivery service organization's logistics networks. Oftentimes, the objects are stored in these various storage areas in designated ("assigned") locations so that the objects can be easily identified and retrieved from the storage areas to help with facilitating the processing of the objects. For example, a delivery service organization will often systematically place objects (e.g., parcels) in the cargo area of a delivery vehicle in designated locations to facilitate delivery personnel being able to quickly identify and retrieve the corresponding objects from the cargo area at the various stops along a delivery route.

The conventional process for loading objects into different storage areas for many delivery service organizations has been to use human labor. This is because loading objects into a storage area can present technical challenges in that automating the loading process can be quite difficult due to the high volume of objects that often need to be loaded, as well as the different sizes of the objects that need to be loaded. Accordingly, a need exists in the relative art for an automated or semi-automated solution for loading objects into a storage area that addresses these technical challenges.

### SUMMARY

This summary is intended to introduce a selection of concepts in a simplified form that is further described below in the detailed description section of this disclosure. This summary is not intended to identify key or essential features of the claimed subject matter, nor is it intended to be used as an aid in isolation to determine the scope of the claimed subject matter.

In brief, and at a high level, this disclosure describes, among other things, various embodiments used for loading objects into a storage area in an automated or semi-automated manner. These embodiments may be implemented in storage areas that are stationary, and/or in storage areas that move, and may be used to transfer, route, and/or organize objects based at least in part on their designated destinations. In addition, various embodiments of the disclosure may be utilized in a logistics network to increase the efficiency, capacity, and/or precision of object handling in a logistics network operation, among other benefits.

In various aspects, a system is provided that comprises a robot comprising: a platform for supporting an object, the platform comprising a transition mechanism for transitioning the object to a designated location located in a storage area, and an elevation mechanism for moving the platform in a vertical direction. In some aspects, the robot further comprises a ramp coupled to the platform that is configured to move to enable the object to transition from the platform to the designated location.

In addition, the system comprises a loading mechanism comprising: a first end, a second end adjacent to the robot, and a surface for traversing the object from the first end to the second end. Further, the system comprises one or more sensors and computing hardware communicatively coupled to the robot, the loading mechanism, and the one or more sensors, wherein the object traverses the surface of the loading mechanism onto the platform of the robot, and the computing hardware is configured to perform operations comprising: identifying, via at least one of the one or more sensors, a presence of the object on the platform, retrieving information that comprises the designated location located in the storage area, operating, based at least in part on the information on the designated location, the loading mechanism to move in the storage area to position the robot horizontally at the designated location, operating, based at least in part on the information on the designated location, the elevation mechanism to position the platform vertically at the designated location, and operating the transition mechanism to place the object into the designated location.

In some aspects, the information further comprises an identifier for the object, at least one of the one or more sensors detects an identification of the object, and the computing hardware is further configured to perform operations comprising: receiving the identification of the object, and comparing the identification of the object with the identifier for the object to verify the object is correct for placing in the designated location. In some aspects, the information on the designated location comprises coordinates, and operating, based at least in part on the information on the designated location, the loading mechanism to move in the storage area to position the robot horizontally at the designated location involves: comparing the coordinates to a current horizontal position of the robot in the storage area, determining, based at least in part on comparing the coordinates to the current horizontal position, that the current horizontal position of the robot is not at the designated location, and responsive to determining that the current horizontal position of the robot is not at the designated location, instructing, based at least in part on the coordinates, the loading mechanism to move in the storage area to position the robot horizontally at the designated location. In some aspects, the information on the designated location comprises coordinates, and operating, based at least in part on the information on the designated location, the elevation mechanism to position the platform vertically at the designated location involves: comparing the coordinates to a current vertical position of the platform, determining, based at least in part on comparing the coordinates to the current vertical position, that the current vertical position of the platform is not at the designated location, and responsive to determining that the current vertical position of the platform is not at the designated location, instructing, based at least in part on the coordinates, the elevation mechanism to move to position the platform vertically at the designated location.

In some aspects, the information further comprises dimensions of the object, and the computing hardware is further configured to perform operations comprising: identifying an available space at the designated location, and determining, based at least in part on the dimensions of the object, that the available space can accommodate the object. In some aspects, at least one sensor of the one or more sensors detects objects that are proximate the designated location, and detecting the available space at the designated location involves: receiving information on the objects that are proximate the designated location; and determining a space between the objects as the available space for placing the object at the designated location. In some aspects, the robot further comprises a gripper, and the computing hardware is further configured to perform operations comprising instructing, based at least in part on the available space, the robot to actuate the gripper to move one or more of the objects that are proximate the designated location to create a larger space for the available space. In some aspects, the computing hardware is further configured to perform operations comprising instructing, based at least in part on the available space, at least one of the elevation mechanism to move vertically or the loading mechanism to move horizontally to align the platform with the available space.

In some aspects, the computing hardware is further configured to perform operations comprising recording a confirmation of placing the object at the designated location and coordinates of a space where the object was placed at the designated location. In some aspects, the loading mechanism comprises a release mechanism, and the computing hardware is further configured to perform operations comprising operating the release mechanism to release the object onto the platform.

In various aspects, a method is provided that comprises: retrieving, via computing hardware communicatively coupled to a robot, a loading mechanism, and one or more sensors, information that comprises a designated location located in a storage area where an object is to be placed; detecting, via at least one of the one or more sensors, a presence of the object on a platform supporting the object, wherein the robot comprises the platform and the object has traversed a surface of the loading mechanism from a first end of the loading mechanism to a second end of the loading mechanism that is adjacent the robot; operating, via the computing hardware and based at least in part on the information on the designated location, the loading mechanism to move in a horizontal direction in the storage area to position the robot horizontally at the designated location; operating, via the computing hardware and based at least in part on the information on the designated location, an elevation mechanism to move the platform of the robot in a vertical direction to position the platform vertically at the designated location; and operating, via the computing hardware, a transition mechanism of the platform to transition the object into the designated location.

In some aspects, the at least one of the one or more sensors comprises at least one of a pressure sensor or an optical sensor that detects the presence of the object on the platform. In some aspects, operating the transition mechanism to transition the object into the designated location involves forcing the object, via the transition mechanism, against a ramp coupled to the platform that is configured to move about a hinge to enable the object to transition from the platform to the designated location.

In some aspects, the information further comprises an identifier for the object, and the method further comprises: detecting, via a first sensor of the one or more sensors, an identification of the object; and comparing, via the computing hardware, the identification of the object with the identifier for the object to verify the object is correct for placing in the designated location. In some aspects, the object is coupled to a radio frequency identification (RFID) tag and the first sensor comprises a RFID tag reader, and detecting the identification of the object comprises receiving, via the RFID tag reader, a response signal to an interrogation signal that comprises the identification of the object. In some aspects, the object comprises a label displaying indicia and the first sensor comprises an optical reader, and detecting the identification of the object comprises reading, via the optical reader, the indicia from the label that comprises the identification of the object.

In some aspects, the information on the designated location comprises coordinates, and operating the loading mechanism to move in the horizontal direction in the storage area to position the robot horizontally at the designated location involves: comparing the coordinates to a current horizontal position of the robot in the storage area; determining, based at least in part on comparing the coordinates to the current horizontal position, that the current horizontal position of the robot is not at the designated location; and responsive to determining that the current horizontal position of the robot is not at the designated location, instructing, based at least in part on the coordinates, the loading mechanism to move in the storage area to position the robot horizontally at the designated location. In some aspects, the information on the designated location comprises coordinates, and operating the elevation mechanism to move the platform of the robot in the vertical direction to position the platform vertically at the designated location involves: comparing the coordinates to a current vertical position of the platform; determining, based at least in part on comparing the coordinates to the current vertical position, that the current vertical position of the platform is not at the designated location; and responsive to determining that the current vertical position of the platform is not at the designated location, instructing, based at least in part on the coordinates, the elevation mechanism to move to position the platform vertically at the designated location.

In some aspects, the information further comprises dimensions of the object, and the method further comprises: detecting, via at least one of the one or more sensors, an available space at the designated location; and determining, via the computing hardware and based at least in part on the dimensions of the object, that the available space can accommodate the object. In some aspects, detecting the available space at the designated location involves: detecting objects that are proximate the available space; and determining a space between the objects as the available space for placing the object at the designated location. In some aspects, the robot further comprises a gripper, and the method further comprises operating, via the computing hardware and based at least in part on the available space, the robot to actuate the gripper to move one or more of the objects that are proximate the designated location to create a larger space for the available space. In some aspects, the method further comprises operating, via the computing hardware and based at least in part on the available space, at least one of the elevation mechanism to move vertically or the loading mechanism to move horizontally to align the platform with the available space.

In some aspects, the method further comprises recording, via the computing hardware, a confirmation of placing the object at the designated location and coordinates of a space where the object was placed at the designated location. In some aspects, the loading mechanism comprises a release mechanism, and the method further comprises operating, via the computing hardware, the release mechanism to release the object onto the platform.

In various aspects, a computer-readable medium storing computer-executable instructions is provided. The computer-executable instructions, when executed by computing hardware communicatively coupled to a robot, a loading mechanism, and one or more sensors, configure the computing hardware to perform operations comprising: retrieving information that comprises a designated location located in a storage area where an object is to be placed; receiving, via at least one of the one or more sensors, a detection of a presence of the object on a platform supporting the object, wherein the robot comprises the platform and the object has traversed a surface of the loading mechanism from a first end of the loading mechanism to a second end of the loading mechanism that is adjacent the robot; operating, based at least in part on the information on the designated location, the loading mechanism to move in a horizontal direction in the storage area to position the robot horizontally at the designated location; operating, based at least in part on the information on the designated location, an elevation mechanism to move the platform of the robot in a vertical direction to position the platform vertically at the designated location; and operating a transition mechanism of the platform to transition the object into the designated location.

In some aspects, the at least one of the one or more sensors comprises at least one of a pressure sensor or an optical sensor that detects the presence of the object on the platform. In some aspects, operating the transition mechanism to transition the object into the designated location involves forcing the object, via the transition mechanism, against a ramp coupled to the platform that is configured to move about a hinge to enable the object to transition from the platform to the designated location. In some aspects, the loading mechanism comprises a release mechanism, and the operations further comprise operating the release mechanism to release the object onto the platform.

In some aspects, the information further comprises an identifier for the object, and the operations further comprise: detecting, via a first sensor of the one or more sensors, an identification of the object; and comparing, via the computing hardware, the identification of the object with the identifier for the object to verify the object is correct for placing in the designated location. In some aspects, the information on the designated location comprises coordinates, and operating the loading mechanism to move in the horizontal direction in the storage area to position the robot horizontally at the designated location involves: comparing the coordinates to a current horizontal position of the robot in the storage area; determining, based at least in part on comparing the coordinates to the current horizontal position, that the current horizontal position of the robot is not at the designated location; and responsive to determining that the current horizontal position of the robot is not at the designated location, instructing, based at least in part on the coordinates, the loading mechanism to move in the storage area to position the robot horizontally at the designated location.

In some aspects, the information on the designated location comprises coordinates, and operating the elevation mechanism to move the platform of the robot in the vertical direction to position the platform vertically at the designated location involves: comparing the coordinates to a current vertical position of the platform; determining, based at least in part on comparing the coordinates to the current vertical position, that the current vertical position of the platform is not at the designated location; and responsive to determining that the current vertical position of the platform is not at the designated location, instructing, based at least in part on the coordinates, the elevation mechanism to move to position the platform vertically at the designated location. In some aspects, the information further comprises dimensions of the object, and the operations further comprise: receiving, via at least one of the one or more sensors, an available space at the designated location; and determining, based at least in part on the dimensions of the object, that the available space can accommodate the object.

In some aspects, the robot further comprises a gripper, and the operations further comprise operating, based at least in part on the available space, the robot to actuate the gripper to move one or more objects that are proximate the designated location to create a larger space for the available space. In some aspects, the operations further comprise operating, based at least in part on the available space, at least one of the elevation mechanism to move vertically or the loading mechanism to move horizontally to align the platform with the available space. In some aspects, the operations further comprise recording a confirmation of placing the object at the designated location and coordinates of a space where the object was placed at the designated location.

### BRIEF DESCRIPTION OF THE DRAWINGS

The present systems, methods, and apparatus for loading objects into a storage area in an automated or semi-automated manner are described in detail in connection with the attached drawing figures, which illustrate non-limiting examples of the disclosed subject matter, wherein:
FIG. 1 depicts an example of a mobile transport with a loading system in accordance with various embodiments of the present disclosure;
FIG. 2 depicts an example configuration of a system for loading objects in accordance with various embodiments of the present disclosure;
FIG. 3 depicts a second example configuration of a platform for transitioning an object to a designated location in accordance with various embodiments of the present disclosure;
FIG. 4 depicts another view of the example configuration shown in FIG. 2 in accordance with various embodiments of the present disclosure;
FIG. 5 depicts an example network of components that may be used in a system for loading objects in accordance with various embodiments of the present disclosure;
FIG. 6 depicts an example of a process for loading an object into a storage area in accordance with various embodiments of the present disclosure;
FIG. 7 depicts an example of a process for identifying an object in accordance with various embodiments of the present disclosure;
FIG. 8 depicts an example of a process for positioning a loading mechanism in accordance with various embodiments of the present disclosure;
FIG. 9 depicts an example of a process for positioning a platform of a robot in accordance with various embodiments of the present disclosure;
FIG. 10 depicts an example of a process for placing an object in a designated space in accordance with various embodiments of the present disclosure; and
FIG. 11 depicts an example of computing hardware suitable for supporting the operation of various embodiments of the present disclosure.

### DETAILED DESCRIPTION

This detailed description is provided in order to meet statutory requirements. However, this description is not intended to limit the scope of the disclosure. Rather, the claimed subject matter may be embodied in other ways, to include different steps, combinations of steps, different features, and/or different combinations of features, similar to those described in this disclosure, and in conjunction with other present or future technologies. Moreover, although the terms "operation," "step," and/or "block" may be used herein to identify different elements of methods employed, the terms should not be interpreted as implying any particular order among or between different elements except when the order is explicitly stated.

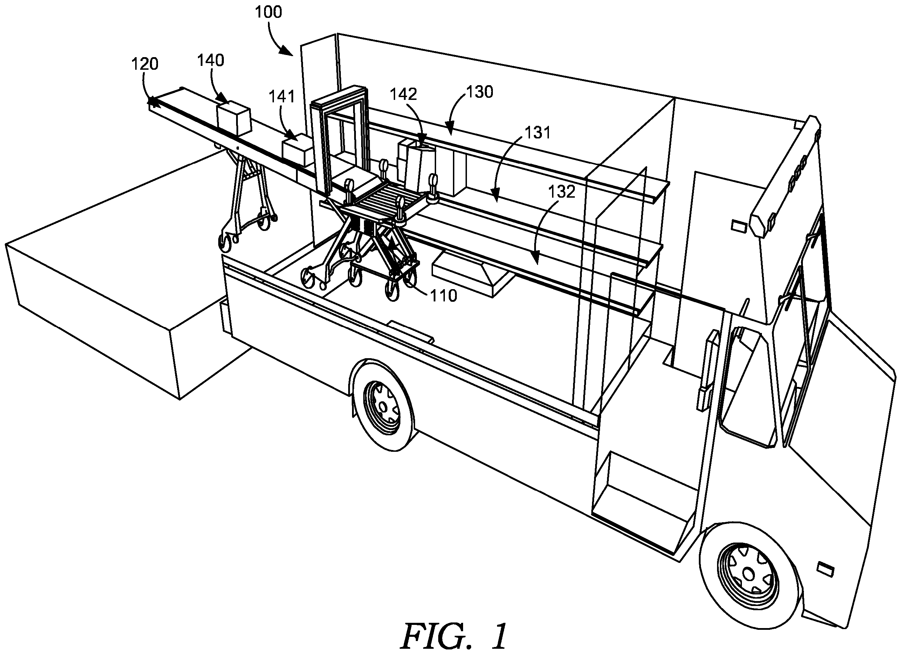

In general, this disclosure describes embodiments used for loading objects into a storage area in an automated or semi-automated manner. These embodiments may be implemented in a storage area that is stationary, and/or in a storage area that is moving, in different aspects, and may be used to organize, transfer, and/or route objects based at least in part on their designated destinations. Various embodiments of the disclosure may further be implemented in a logistics network to increase the efficiency, capacity, and/or precision of an associated logistics network operation. Example aspects that achieve these benefits are described below with reference to FIGS. 1-11.

### Overview

As noted, the conventional process for loading objects into different storage areas for many delivery service organizations has been to use human labor. This is because loading objects into a storage area can present technical challenges in that automating the loading process can be quite difficult due to the high volume of objects that often need to be loaded, as well as the different sizes of the objects that need to be loaded.

Accordingly, various embodiments of the disclosure overcome the technical challenges associated with automating or semi-automating a process for loading objects into a storage area. More specifically, in various embodiments, a system is provided that includes a robot, a loading mechanism, one or more sensors, and computing hardware. In particular embodiments, the robot includes a platform for supporting an object that is to be loaded into a storage area. For example, the platform may be a flat surface on which object sits. However, in other embodiments, the platform may have other configurations such as, for example, a concave shape that holds the object that is to be loaded into the storage area.

In addition, the platform may comprise a transition mechanism that is configured for transitioning (e.g., moving) the object from the platform to a designated location located in the storage area. As an illustrative example, the transition mechanism may comprise a set of rollers that make up the surface of the platform on which the object sits. The set of rollers may be operated to rotate in a certain direction to transition (e.g., move) the object from the platform to the designated location. As another illustrative example, the transition mechanism may comprise a set of bearings that are spread across the surface of the platform on which the object sits. Like the set of rollers, the set of bearings may be operated to rotate in a certain direction to transition the object from the platform to the designated location. In some embodiments, the set of bearings may be operable to retract into the surface of the platform to assist in keeping the object stationary on the platform while in movement to the designated location. Once at the designated location, the set of bearings may then project (e.g., pop up) from the surface of the platform and rotate in a certain direction to transition the object from the platform to the designated location.

In various embodiments, the robot further comprises an elevation mechanism for moving the platform in a vertical direction so that the platform can be aligned vertically with a designated location found in the storage area. For example, the storage area may be a cargo area of a delivery vehicle that has shelves stacked along the interior walls of the cargo area to store objects in the form of parcels during transit to final (e.g., delivery) destinations. Accordingly, the different parcels may need to be stored along the shelves at various designated locations on the shelves based at least in part on a delivery route being driven to deliver the parcels. The elevation mechanism may enable the robot to move the platform in a vertical direction to reach the different shelves of the stacked shelves found along the interior walls of the cargo area so that the robot may place the parcels as different designated locations along the shelves. In addition, the robot may comprise a ramp coupled to the platform that is configured to move to enable the parcels to transition from the platform to the designated locations along the shelves.

In various embodiments, the system makes use of a loading mechanism to move objects from an area outside of the storage area into the storage area, and/or to move objects horizontally within the storage area. For example, the system may make use of a loading mechanism that is a conveyor that may traverse objects over a horizontal distance from a first end of the conveyor to a second end of the conveyor. In particular embodiments, the loading mechanism may comprise a surface (e.g., a conveyor belt) for traversing the objects from the first end to the second end, with the robot located adjacent to the second end so that an object that has traversed the surface of the loading mechanism may then transition onto the platform of the robot so that the robot may then place the object at a designated location within the storage area.

In addition, in various embodiments, the system may also include one or more sensors configured for identifying different conditions and parameters associated with the system loading objects into designated locations within the storage area. For example, the system may include one or more sensors configured to identify an object that has traversed the surface of the loading mechanism and has transitioned, or is available to transition, onto the platform of the robot. The system may include such sensors to assist the system in identifying and/or verifying what object has currently transitioned to, or is available to transition to, the platform of the robot for loading into the storage area.

As an illustrative example, the system may include one or more optical sensors that are configured to read indicia (e.g., text, a barcode, a quick response (QR) code, and/or the like) off of a label placed on the object as the object traverses the surface of the loading mechanism and/or once the object has transition onto the platform of the robot. Here, the indicia may include an identification of the object (e.g., a tracking identifier for the object). As another illustrative example, the object may be coupled to a tracking tag, such as a radio-frequency identification (RFID) tag, and the system may include one or more sensors that comprise one or more tag readers (e.g., RFID tag readers). Here, the one or more sensors may receive a signal from the tag that includes an identification of the object (e.g., a response from the tag as a result of sending an interrogation signal to the tag) as the object traverses the surface of the loading mechanism and/or once the object has transition onto the platform of the robot. The system may then use the identification of the object that has currently transitioned to, or is available to transition to, the platform of the robot so that the system can verify that the correct object is available to loaded into the storage area.

In addition, the system may include one or more sensors for determining that an object has transitioned onto the platform of the robot. For example, the system may include one or more pressure sensors and/or optical sensors that can detect an object that has transitioned onto the platform of the robot. The system may use such sensors to establish (e.g., verify) that an object has transitioned onto the platform of the robot and is available to place in a designated location within the storage area.

Further, the system may include one or more sensors to assist in placing the object into the designated location within the storage area. For example, the system may include one or more optical sensors that the system uses in detecting what space is available at the designated location to place the object into the designated location. As an illustrative example, the object may be an appliance part that is to be placed onto a shelf found in a warehouse storage area. Here, the system may use the one or more optical sensors to detect other appliance parts that have already been placed on the shelf and are adjacent to the designated location on the shelf where the appliance part is to be placed. The system may then determine the available space between the other appliance parts that are adjacent to (e.g., that are on opposite sides of) the designated location. The system may then determine whether the appliance part will fit within the available space.

Additionally, or alternatively, the system may determine whether the platform of the robot is aligned with the available space at the designated location and move the platform accordingly, if the platform is not aligned. Additionally, or alternatively, system may use other types of sensors to assist in placing the object into the designated location such as, for example, radar sensors, LIDAR sensors, and/or the like. Further, in some embodiments, the system may use one or more of the sensors for multiple purposes. For example, the system may use one or more optical sensors in identifying the object that is available to be placed at a designated location, determining the object has transition to the platform of the robot, and/or detecting the objects adjacent to the designated location and available space for placing the object in the designated location.

Accordingly, in various embodiments, the system includes computing hardware that is communicatively coupled to the robot, the loading mechanism, and the one or more sensors to operate these components in placing objects into designated locations within the storage area. Depending on the embodiment, the computing hardware may comprise a single computing device, or multiple computing devices that are local or remote from one another. For example, the computing hardware may be incorporated as a component of the robot and/or the loading mechanism. Additionally, or alternatively, the computing hardware may be remote from the robot and/or the loading mechanism and communicate with the robot and/or the loading mechanism over a wireless network. In addition, the computing hardware may be communicatively coupled to computer storage (e.g., one or more databases) and/or one or more other systems. For example, the computing hardware may be communicatively coupled to a database or another system to gather information on the objects that are to be loaded into the storage area.

Accordingly, the computing hardware may perform various operations to facilitate loading objects into designated locations within the storage area. For example, the computing hardware may perform operations that involve retrieving information the comprises a designated location located in the storage where an object is to be placed, identifying, via at least one of the one or more sensors, a presence of an object on the platform of the robot, operating, based at least in part on the information on the designated location, the loading mechanism to move in the storage area to position the robot horizontally at the designated location, operating, based at least in part on the information on the designated location, the elevation mechanism to position the platform vertically at the designated location, and operating the transition mechanism to place the object into the designated location.

In various embodiments, the computing hardware may retrieve additional information that involves loading the objects into designated locations within the storage area. For example, the computing hardware may retrieve information that includes an identifier for an object that is to be placed at a designated location. Here, one or more sensors may detect an identification of an object that is currently traversing the loading mechanism and/or has transitioned to the platform of the robot. In turn, the computing hardware may compare the identification of the object with the identifier to verify that object that is currently traversing the loading mechanism and/or has transitioned to the platform is the correct object that is to be placed at the designated location.

In some embodiments, the computing hardware may retrieve information on the designated location that comprises coordinates. The computing hardware may perform operations that involve comparing the coordinates to a current horizontal position of the robot in the storage area, and determining, based at least in part on comparing the coordinates to the current horizontal position, that the current horizontal position of the robot is not at the designated location. The computing hardware may then instruct the loading mechanism to move in the storage area, based at least in part on the coordinates, to position the robot horizontally at the designated location.

Additionally, or alternatively, the computing hardware may perform operations that involve comparing the coordinates to a current vertical position of the platform, and determining, based at least in part on comparing the coordinates to the current vertical position, that the current vertical position of the platform is not at the designated location. The computing hardware may then instruct the elevation mechanism to move, based at least in part on the coordinates, to position the platform vertically at the designated location.

In some embodiments, the computing hardware may retrieve information that includes dimensions of the object. As previously discussed, the computing hardware may utilize one or more sensors in identifying an available space at the designated location. For example, the computing hardware may receive information on objects that the one or more sensors detected that are proximate the designated location and determine a space between the objects as the available space for placing the object at the designed location. In turn, the computing hardware may determine, based at least in part on the dimensions of the object, whether the available space can accommodate the object. Additionally, or alternatively, the computing hardware may instruct, based at least in part on the available space, the loading mechanism to adjust horizontally to align the robot with the available space.

In some embodiments, the computing hardware may perform additional, or alternative, operations. For example, the loading mechanism may include a release mechanism that holds an object from transitioning to the platform of the robot. Here, the computing hardware may operate the release mechanism, at an appropriate time, to release the object onto the platform. Further, the computing hardware may perform operations upon placing an object at a designated location such as, for example, recording a confirmation of placing the object at the designated location and/or recording coordinates of a space where the object was placed at the designated location. Further detail is now provided on the system and components thereof, as well as operation of the system.

### Example System Configurations

FIG. 1 depicts an example of a storage area 100 in which a loading system in accordance with various embodiments of the present disclosure is being utilized. Here, the storage area 100 is a cargo area of a mobile transport (e.g., a delivery vehicle). The storage area 100 of the mobile transport is located at the rear of the transport. The storage area 100 is defined by the interior floor, sidewalls, ceiling, and rear wall of the mobile transport. The sidewalls may be lined with shelves 130, 131, 132 that is vertically stacked and used for storing objects during transit. Accordingly, an "object" can be any type of item, component, element, piece, and/or the like that is to be loaded into the storage area 100 such as, for example, an appliance part, a parcel, computer equipment, and/or the like. The loading system is comprised of a robot 110 and a loading mechanism 120. The loading mechanism 120 is extending from an exterior of the storage area 100, through a doorway of the storage area 100, and into the storage area 100 so that objects 140, 141 can traverse from a first end to a second end of the loading mechanism 120. The robot 110 is located adjacent the second end of the loading mechanism 120 so that the robot 110 can place objects 142 at designated locations on the shelves 130, 131, 132 for storage.

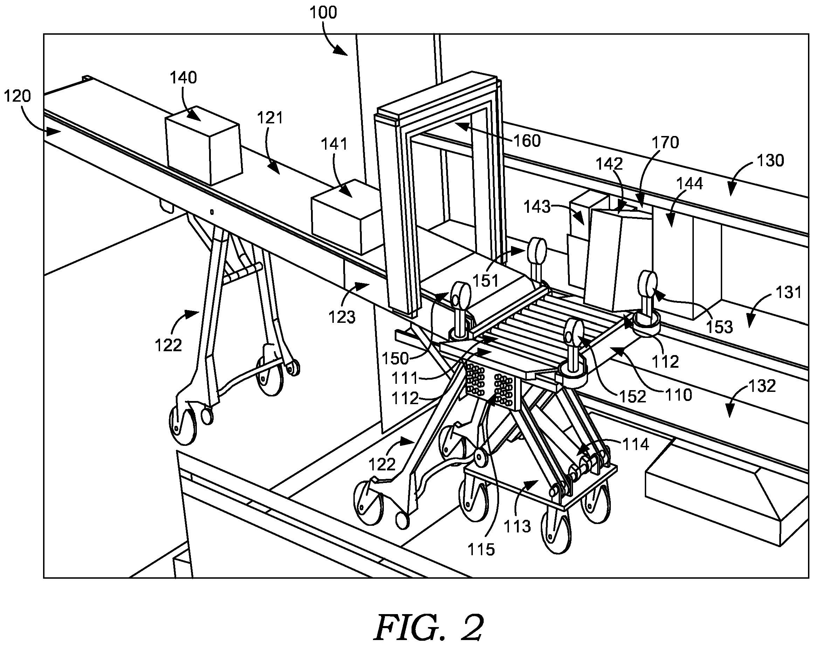

Turning to FIG. 2, in particular embodiments, the loading mechanism 120 may be a conveyor having a surface 121 that comprises a conveyor belt. As an illustrative example, the loading mechanism 120 may be an extendible conveyor that can accommodate variable depths of storage areas. The loading mechanism 120 may comprise a telescoping boom 123 and an endless conveyor belt. The telescoping boom 123 may be extendible so that the loading mechanism 120 can reach horizontally to different depths within the storage area 100. The telescoping boom 123 may be either cantilevered or have one or more supports 122 provided at points along the length of the extended boom members. In addition, the one or more supports 122 may comprise casters and/or wheels for purposes of portability of the loading mechanism 120.

The loading mechanism 120 may include extension components for extending the boom members of the telescoping boom 123. For example, the loading mechanism 120 may include telescoping hydraulic cylinders located coaxially within the nested boom members and/or motorized synchronized gearing. In addition, the loading mechanism 120 may include take-up components for taking up excess conveyor belt length that results when the boom members are retracted, as well as paying out conveyor belt length as the boom members are extended. For example, the take-up components may include take-up rollers mounted within each boom member to allow excess belt length to be taken up within the boom member itself.

Another example of the take-up components may include moving roller assemblies having opposed rollers about which the conveyor belt is supported in a serpentine pattern. Here, the rollers are caused to move relative to one another as the boom members move. The opposed rollers are urged apart by springs or a combination of hydraulic cylinders acting against the belt tension and roller assembly weight. The roller assemblies may be arranged such that the belt runs substantially vertically between take-up rolls.

The loading mechanism 120 can provide an advantage of enabling a high object handling capacity over a wide range of different sized storage areas, as well as a wide range of different storage area configurations. The loading mechanism 120 can be extended along the horizontal length of the storage area 100 to reach different designated locations on the shelves 130, 131, 132. The second end of the loading mechanism 120 (e.g., the telescoping boom 123) is extendable relative to the first end of the loading mechanism 120 to permit the extended length of the telescoping boom 123 to extend from a retracted length to an extended length. The telescoping boom 123 defines an upper support surface 121 for carrying objects between the first end and the second end. In addition, the telescoping boom 123 may support end rollers adjacent the first end and the second end, as well as be supported at one end by a pivot assembly and the second end by a motorized boom support.

The endless conveyor belt may have a predetermined belt length and may define an excess belt portion and an active belt portion that is supported for rotation about the telescoping boom 123 as any extended length. The take-up components may accumulate the excess portion of the conveyor belt and are coordinated with the movement of the telescoping boom 123 by a control arrangement that maintains the conveyor belt at a desired tension during extension and traversing objects 140, 141 along the support surface.

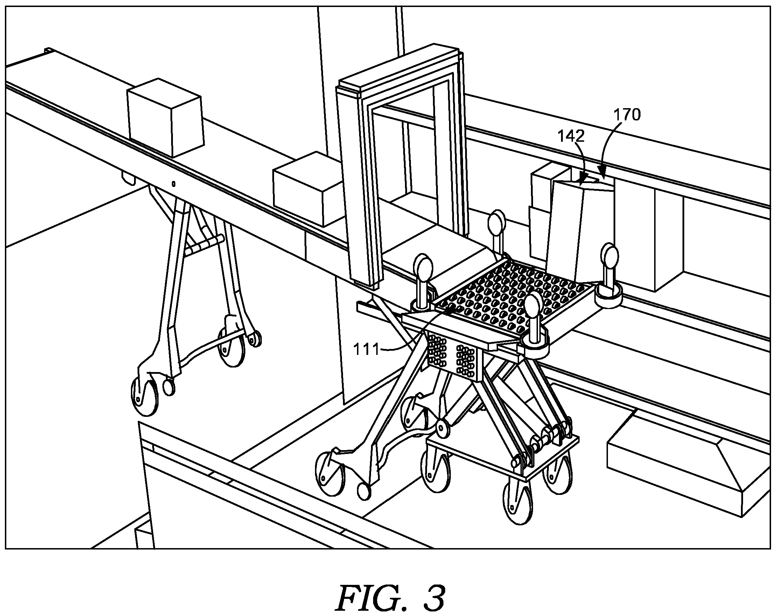

The robot 110 assists in moving objects 140, 141, 142 that traverse the loading mechanism 120 to designated locations on the shelves 130, 131, 132 within the storage area 100. The robot 110 includes a platform 111 from which the objects 140, 141, 142 transition from the surface 121 of the loading mechanism 120 to the platform 111. The platform 111 may include a transition mechanism that assists in transitioning an object 142 to a designated location 170 on a shelf 131. For example, as shown in FIG. 2, the transition mechanism may comprise a set of rollers that are operable to rotate and move the object 142 from the platform 111 to the designated location 170 on the shelf 131. As another example, shown in FIG. 3, the transition mechanism may comprise a set of bearings that are operable to rotate and move the object 142 from the platform 111 to the designated location 170 on the shelf 131. In some embodiments, the set of bearings may be configured to retract into the platform 111 to assist in keeping the object 142 stationary while the platform 111 is being moved to the designated location 170. A motor or other movement mechanism may be used in operating the transition mechanism.

In some embodiments, the robot 110 includes a base 113 on which the robot 110 is supported. In addition, the base 113 may comprise casters and/or wheels to enable the robot 110 to move horizontally along the floor of the storage area 100 as the telescoping boom 123 of the loading mechanism 120 is extended and/or retracted. The robot 110 further includes an elevation mechanism 114 that is coupled to the base 113 at a first end and coupled to the platform 111 at a second end of the elevation mechanism 114. The elevation mechanism 114 is configured to raise and lower the platform 111 vertically so that objects can be placed at designated locations on the shelves 130, 131, 132 at different heights. For example, the elevation mechanism 114 may comprise a set of arms that operate in a scissor-like motion to raise and lower the platform 111 to position the platform 111 vertically at a designated location 170 along a shelf 131. The elevation mechanism 114 may be driven by some type of movement mechanism such as, for example, a motor and gears, a hydraulic lift, and/or the like.

Further, the robot 110 may include a gripper 115 that can grasp the surface of an object and then move the object horizontally and/or vertically (e.g., for minor position adjustment). For example, the system may determine that objects 143, 144 that have already been placed on the shelf 131 at or near the designated location 170, and the objects 143, 144 are too close together so that the distance between the two objects 143, 144 is too small to fit the object 142 being placed at the designated location 170. In this case, the system may actuate the gripper 115 to grasp one or both of the objects 143, 144, and move one or both of the objects 143, 144 so that the space between the two objects 143 144 becomes large enough to fit the object 142 being placed at the designated location.

Furthermore, the robot 110 may include some type of controller (not pictured), such as a programmable logic controller (PLC), that can receive and execute instructions to operate the elevation mechanism 114, the transition mechanism, the gripper 115, and/or other components of the robot 110. The loading mechanism 120 may include a similar controller for the purpose of receiving and executing instructions to operate components of the loading mechanism 120.

In addition to the robot 110 and the loading mechanism 120, the system may include one or more sensors for assisting the system with placing objects at different designated locations along the shelves 130, 131, 132. For example, the system may include one or more sensors 160 for identifying an object 140, 141 as the object 140, 141 traverses the surface 121 of the loading mechanism 120 and/or is sitting on the platform 111. As an illustrative example, the one or more sensors 160 may be one or more optical sensors that read indicia (e.g., text, a barcode, a quick response (QR) code, and/or the like) off of a label placed on the object 140, 141 as the object 140, 141 traverses the surface 121 of the loading mechanism 120 and/or once the object 140, 141 has transitioned onto the platform 111 of the robot 110. Here, the indicia may include an identification of the object 140, 141 (e.g., a tracking identifier for the object 140, 141).

Additionally, or alternatively, the object 140, 141 may be coupled to a tracking tag, such as a radio-frequency identification tag, and the one or more sensors 160 may comprise one or more tag readers (e.g., RFID tag readers). The one or more tag readers may receive a signal from the tag that includes an identification of the object 140, 141 (e.g., a response from the tag as a result of sending an interrogation signal to the tag) as the object 140, 141 traverses the surface 121 of the loading mechanism 120 and/or once the object 140, 141 has transitioned onto the platform 111 of the robot 110. The system may then use the identification of the object 140, 141 that has currently transitioned to, or is available to transition to, the platform 111 of the robot 110 so that the system can verify that the correct object is available to loaded into the storage area 100.

Additionally, or alternatively, the system may include one or more sensors for determining that an object has transitioned onto the platform 111 of the robot 110 and is available to place in a designated location within the storage area 100. For example, the system may include one or more pressure sensors (not shown) and/or optical sensors 150, 151, 152, 153 that can detect an object 142 that has transitioned onto the platform 111 of the robot 110. Once detected, the system may then proceed with placing the object 142 into a designated location 170 within the storage area 100.

Further, the system may include one or more sensors to assist in placing the object 142 into the designated location 170 within the storage area 100. For example, the system may include one or more optical sensors 150, 151, 152, 153 that the system uses in detecting what space is available at the designated location 170 to place the object 142 into the designated location 170. Note that in some embodiments, one or more of the sensors may be configured for multiple operations such as, for example, the optical sensors 150, 151, 152, 153 may be configured to detect an object 142 has transitioned onto the platform 111, as well as assist in placing the object 142 into the designated location 170.

As an illustrative example, the system may initially use one or more of the optical sensors 150, 152, 152, 153 to detect that an object 142 has transitioned onto the platform 111 of the robot 110. The system may then operate the loading mechanism 120 to move the robot 110 within the storage area 100 to position the robot 110 horizontally at the designated location 170 within the storage area 100. The system may then operate the elevation mechanism 114 of the robot 110 to position the platform 111 vertically at the designated location 170.

The system may then use one or more of the optical sensors 150, 151, 152, 153 to assist the robot 110 in placing the object 142 into the designated location 170 on the shelf 131. Here, the system may use one or more of the optical sensors 150, 151, 152, 153 to detect other objects 143, 144 that have already been placed on the shelf 131 and are adjacent to the designated location 170 on the shelf 131 where the object 142 is to be placed. The system may then determine the available space between the other objects 143, 144 that are adjacent to (e.g., that are on opposite sides of) the designated location 170. The system may determine whether the available space can accommodate the object 142. If not, then the system may instruct the robot 110 to actuate the gripper 115 to move (e.g., adjust) the other objects 143, 144 to make room to place the object 142 at the designated location 170. If the other objects 143, 144 are not able to be moved to make room, then the system may place the object 143 at a re-sort location within the storage area 100. For example, the system may place the object 143 at a location at the back of the storage area 100 that has been identified for depositing objects that have been incorrectly placed on the loading mechanism 120 and should not be loaded into their associated designated locations and/or will not fit into their designated locations within the storage area 100.

Additionally, or alternatively, the system may also use one or more of the optical sensors 150, 151, 152, 153 to determine whether the platform 111 of the robot 110 is aligned with the available space at the designated location 170 and move the platform 111 accordingly if the platform 111 is not aligned. Additionally, or alternatively, the system may use other types of sensors to assist in placing the object 143 into the designated location 170 such as, for example, radar sensors, LIDAR sensors, and/or the like.

Once the system has determined the available space at the designated location 170 will accommodate the object 143 and the platform 111 is aligned with the available space, the system may operate the transition mechanism of the platform 111 to transition the object 143 into the available space at the designated location 170. In some embodiments, the robot 110 may comprise a ramp 112 that assists in transitioning the object 143 into the available space. For example, the robot 110 may comprise a ramp 112 on each of opposite sides of the platform 111 that move about a hinge so that the ramp 112 can lower to assist in transitioning objects into designated locations on both sides of the robot 110. Therefore, the system may operate the ramp 112, in conjunction with the transition mechanism, to transition the object 143 into the available space at the designated location 170.

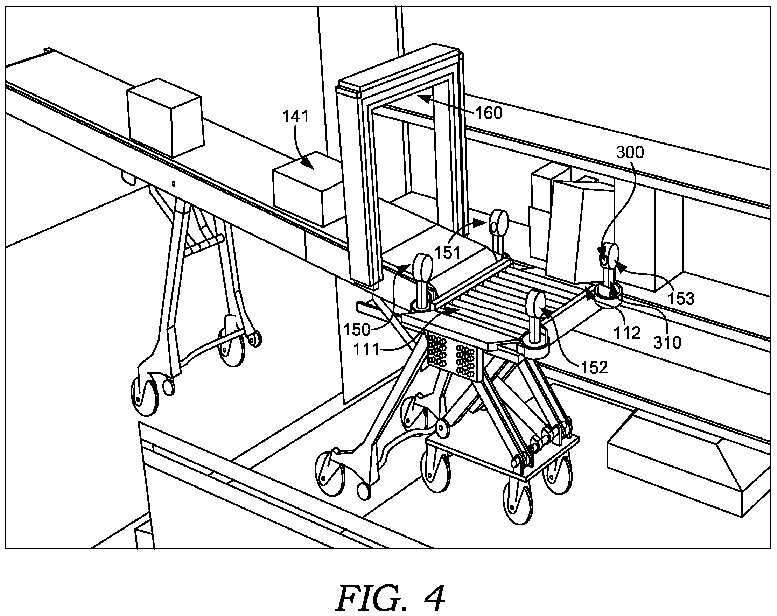

Once the system has transitioned the object 143 into the available space at the designated location 170, the system may return to a neutral position to prepare for a next object to be placed at a designated location within the storage area 100. For example, turning to FIG. 4, the system may rotate the optical sensors 150, 151, 152, 153 to a position 300 so that they can detect a next object 141 transitioning onto the platform 111 of the robot 110. In some embodiments, the optical sensors 150, 151, 152, 153 may be mounted on posts 310 that can be operated to position the optical sensors 150, 151, 152, 153 vertically at different heights so that the optical sensors 150, 151, 152, 153 can detect objects of various sizes. Accordingly, the system may adjust the posts 310 of the optical sensors 150, 151, 152, 153 to return the sensors 150, 151, 152, 153 to a neutral height.

Additionally, or alternatively, the system may engage one or more sensors 160 to identify a next object 141 traversing the surface 121 of the loading mechanism 120 and/or is sitting on the platform 111. Further, the system may stop operation of the transition mechanism of the platform 111 and/or move the ramp 112 back to a neutral position. Further, the system may operate the loading mechanism 120 and/or the elevation mechanism 114 of the robot 110 to begin to position the platform 111 at a next designated location for an object 141 that is traversing the surface 121 of the loading mechanism 120 and/or has transition onto the platform 111 of the robot 110.

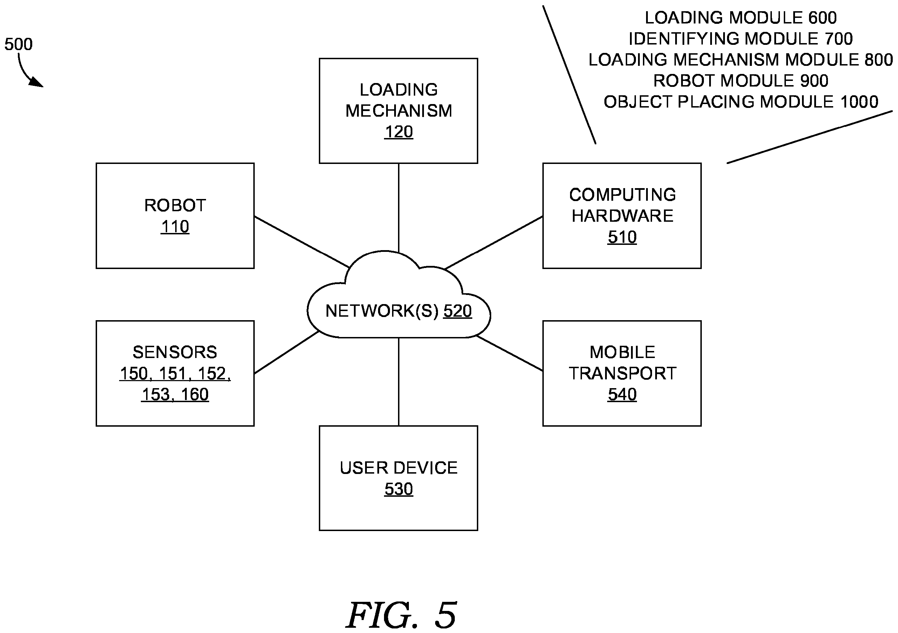

Turning to FIG. 5, a network diagram 500 is provided that shows a selection of components that may be used with a system for loading objects into designated locations within a storage area 100 according to various embodiments. The components shown in FIG. 5 are communicatively coupled over one or more networks 520 (e.g., one or more of a Local Area Network (LAN), a Wide Area Network (WAN), the Internet, and/or the like that may include wired, wireless, fiber optic, and/or any combination thereof). The connections between the different components over the one or more networks 520 may be local (e.g., integrated, at least in part, into a common structure), and/or may be distributed (e.g., physically separate, at least in part, but communicatively coupled). In addition, some components may be communicatively coupled to one or more components without being communicatively coupled to other components of the system. For example, the loading mechanism 120 may be exclusively coupled to the robot 110 and the robot 110 may communicate instructions to the loading mechanism 120 that have been communicated to the robot 110 via computing hardware 510 to operate the loading mechanism 120.

In various embodiments, the computing hardware 510 is configured to control operations of the system and facilitate placing objects into designated locations within a storage area 100. The computing hardware 510 may represent a single computing device, or may represent multiple computing devices that are either locally or remotely distributed from one another. For example, the computing hardware 510 may include a first computing device that is located locally with respect to the robot 110, the loading mechanism 120, and/or the sensors 150, 151, 152, 153, 160 that is configured to send instructions to the robot 110, loading mechanism 120, and/or sensors 150, 151, 152, 153, 160 (e.g., to controllers thereof) to have the robot 110, loading mechanism 120, and/or sensors 150, 151, 152, 153, 160 perform different operations. In addition, the computing hardware 510 may include a second computing device that is located remote from the robot 110, loading mechanism 120, and/or sensors 150, 151, 152, 153, 160 that sends information to the first computing device on different objects that are to be loaded into designated locations within the storage area 100.

For example, the second computing device may send the first computing device information that includes a loading order for the different objects that are to be loaded into designated locations within the storage area 100, as well as information identifying the different objects, dimensions of the different objects, coordinates for the designated locations, and/or the like. In turn, the first computing device may use the information received from the second computing device in generating instructions to send to the robot 110, loading mechanism 120, and/or sensors 150, 151, 152, 153, 160 to perform different operations in placing the different objects at the designated locations within the storage area 100.

In some embodiments, the computing hardware 510 may be communicatively coupled to other components such as, for example, a user device 530 and/or a mobile transport 540. As an illustrative example, the system may be used in loading parcels into a storage area 100 of a mobile transport 540 such as a delivery vehicle. Here, the driver of the mobile transport 540 may carry a mobile user device 530 to assist him or her in delivering the parcels to final destinations. In addition, the mobile transport 540 may include a computing device that is used in assisting the driver in delivering the parcels to the final destinations.

The computing hardware 510 may communication information to the user device 530 and/or the mobile transport 540 (e.g., computing device thereof) on the parcels that have been loaded into the storage area 100 of the mobile transport 540. For example, the user device 530 may use the information received from the computing hardware 510 to display information to the driver during his or her delivery route on the next parcels, such as delivery addresses, that are to be delivered during the route. Such information may assist the driver to perform deliveries of the parcels more easily as the driver is able to more quickly and efficiently recognize next stops that are required along the route.

Additionally, or alternatively, the computing hardware 510 may communication information, such as coordinates of spaces (e.g., at the designated locations) at which parcels have been placed within the storage area 100, to the mobile transport 540. In turn, the mobile transport 540 may be configured to use the information communicated by the computing hardware 510 in controlling various components to assist the driver in identifying the next parcels that needed to be delivered during his or her route. For example, the shelves 130, 131, 132, of the storage area 100 may include visual indicators (e.g., lights) at different locations along the shelves 130, 131, 132. The mobile transport 540 (e.g., computing device thereof) may use the information to control the visual indicators during the driver's route to identify what parcels need to be delivered at each stop along the route.

In various embodiments, the computing hardware 510 may execute one or more modules (e.g., computer-executable instructions) in operating the system with respect to loading an object 142 into a designated location 170 within a storage area 100 as detailed herein. For example, the computing hardware 510 may execute a loading module 600 for controlling various components of the system, such as the robot 110, the loading mechanism 120, and/or the sensors 150, 151, 152, 153, 160, in loading the object 142 into the designated location 170 within the storage area 100. Additionally, or alternatively, the computing hardware 510 may execute an identifying module 700 for identifying the object 142 at the object 142 is traversing the surface 121 of the loading mechanism 120 and/or that has transition onto the platform 111 of the robot 110. Additionally, or alternatively, the computing hardware 510 may execute a loading mechanism module 800 for positioning the loading mechanism 120, as well as a robot module 900 for positioning the robot 110, to facilitate loading the object 143 into the designated location 170. Further, the computing hardware 510 may execute an object placing module 1000 for placing the object 143 into the designated location 170. Further detail is provided on operations carried out by these various modules 600, 700, 800, 900, 1000 according to various embodiments of the disclosure.

### Loading Module

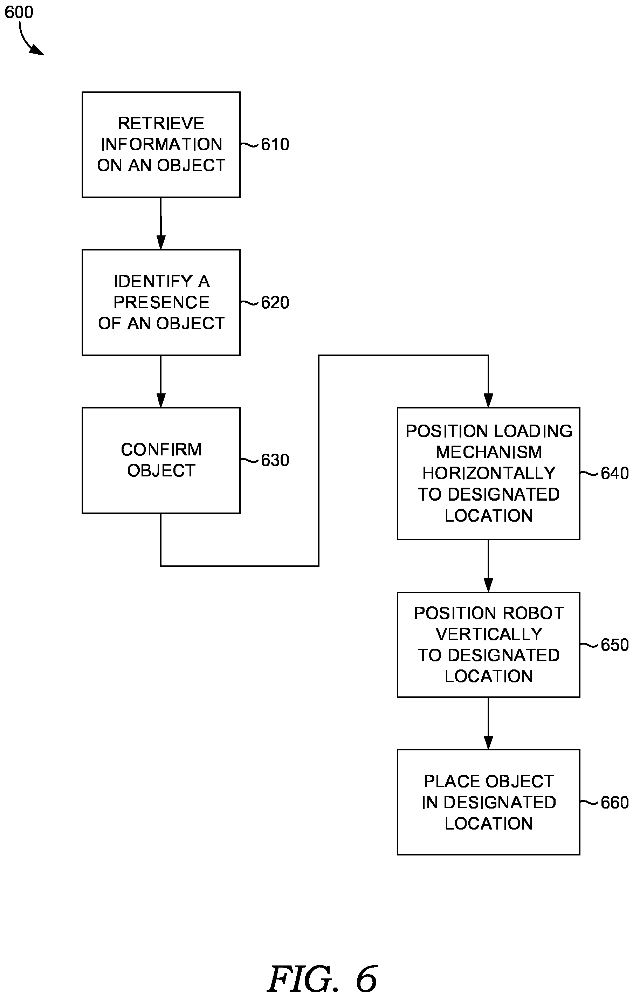

Turning now to FIG. 6, additional details are provided regarding a loading module 600 for controlling various components of the system in loading an object 142 into a designated location 170 within a storage area 100 in accordance with various embodiments of the disclosure. For instance, the flow diagram shown in FIG. 6 may correspond to operations carried out, for example, by computing hardware 510 as described herein, as the computing hardware 510 executes the loading module 600.

The process involves the loading module 600 receiving information on a next object that is to be place at a designated location at Operation 610. For example, the loading module 600 may receive information that identifies the next object such as an object identifier (e.g., tracking number), a tag identifier for a tag (e.g., RFID tag) that is coupled to the next object, and/or the like. Additionally, or alternatively, the loading module 600 may receive information that provides dimensions of the next object. For example, the loading module 600 may receive a height of the object, a width of the object, a length of the object, a weight of the object, and/or the like. Additionally, or alternatively, the loading module 600 may receive information on the designated location 170 where the object is to be placed in the storage area 100. For example, the loading module 600 may receive coordinates for the designated location 170 such as a horizontal distance and a vertical distance within the storage area 100, a location identifier such as a shelf number, and/or the like.

At Operation 620, the loading module 600 identifies a presence of an object 142 on the platform 111 of the robot 110, or is available to transition to the platform 111 of the robot 110. For example, the loading module 600 may receive an indication from one or more sensors, such as one or more optical sensors 150, 151, 152, 153 and/or pressure sensors, that an object 142 has transitioned onto the platform 111, or that is sitting on the surface 121 of the loading mechanism 120 and is waiting to transition to the platform 111. In some embodiments, the loading mechanism 120 may include a release mechanism that holds the object 142 on the surface 121 of the loading mechanism 120. For example, the release mechanism may be a movable barrier that can be raised above the surface 121 of the loading mechanism 120 to hold the object on the surface 121 of the loading mechanism 120. In these embodiments, upon detecting the object 142 is available to transition to the platform 111, the loading module 600 may operate (e.g., instruct) the release mechanism to release the object 142 so that the object 142 may transition onto the platform 111 of the robot 110. For example, the loading module 600 may operate the movable barrier to lower below the surface 121 of the loading mechanism 120 to release the object 142 so that the object 142 may transition onto the platform 111. The loading mechanism 120 may include such a mechanism to ensure that objects are transitioned to the platform 111 one at a time for loading into the storage area 100.

At Operation 630, the loading module 600 confirms that the object 142 that has transitioned onto the platform 1 11, or is waiting to transition onto the platform 111, is the next object that is to be loaded into the storage area 100. In particular embodiments, the loading module 600 performs this operation by executing an identifying module 700. In turn, the identifying module 700 identifies that the object 142 that has transitioned onto the platform 111, or is waiting to transition onto the platform 111, is the next object that is to be loaded into the storage area 100. In some embodiments, if the identifying module 700 determines the object 142 is not the next object to be loaded into the storage area 100, then the identifying module 700 may place the object 142 to a re-sort location found within the storage area 100.

At Operation 640, the loading module 600 positions the loading mechanism 120 horizontally to the designated location 170. In particular embodiments, the loading module 600 performs this operation by executing a loading mechanism module 800. In turn, the loading mechanism module 800 operates the loading mechanism 120 to move horizontally within the storage area 100 to where the designated location 170 can be found. As an illustrative example, the storage area 100 may comprise a cargo area of a delivery transport that has an aisle with shelves 130, 131, 132 on both sides of the aisle. Here, the loading mechanism module 800 may operate the loading mechanism 120 to move the loading mechanism 120 along the aisle to a position that is horizontally assigned to the designated location 170 found on one of the shelves 130, 131, 132.

In addition, at Operation 650, the loading module 600 positions the platform 111 of the robot 110 vertically to the designated location 170. In particular embodiments, the loading module 600 performs this operation by executing a robot module 900. The robot module 900 operates the elevation mechanism 114 of the robot 110 to vertically raise or lower the platform 111 of the robot 110 to the designated location 170. As an illustrative example, the robot module 900 operations the elevation mechanism 114 to vertically raise or lower the platform 111 of the robot 110 to the shelf 131 where the designated location 170 is found.

Once the platform 111 is vertically positioned at the designated location 170, the loading module 600 places the object 142 in the designated location 170 in Operation 660. In particular embodiments, the loading module 600 performs this operation by executing an object placing module 1000. In some embodiments, the object placing module 1000 may initially determine what space is available at the designated location 170. Additionally, or alternatively, the object placing module 1000 may determine whether the available space at the designated location 170 can accommodate the object 142. If not, then the object placing module 1000 may place the object 142 in a re-sort location. Additionally, or alternatively, the object placing module 1000 may operate the loading mechanism 120 and/or robot 110 to better align the platform 111 of the robot 110 with the available space at the designated location 170. The object placing module 1000 then transitions (e.g. places) the object 142 into the available space at the designated location 170.

At this point, the loading module 600 in various embodiments resets the system so that the system is ready to place another object 140, 141 into a designated location. For example, the loading module 600 may operate the loading mechanism 120 and/or robot 110 to return to a neutral position to prepare for placing another object 140, 141 into a designated location. Additionally, or alternatively, the loading module 600 may operation one or more of the sensors 150, 151, 152, 153, 160 to reset the sensors 150, 151, 152, 153, 160 to a neutral position to assist the system with placing another object 140, 141 into a designated location.

In some embodiments, the loading module 600 (or some other module such as the object placing module 1000) may record information on the placement of the object 142 into the designated location 170. For example, the loading module 600 may record a confirmation that the object 142 has been loaded into the designated location 170 within the storage area 100. The loading module 600 may record the confirmation by sending one or more notifications to other components and/or systems indicating the object 142 has been loaded into the designated location 170. As an illustrative example, the loading module 600 may send a notification to a sorting system, a user device 530, computing hardware for a mobile transport 540, and/or the like so that the sorting system, user device 530, and/or mobile transport 540 can use the notification in executing operations concerning the object 142. Additionally, or alternatively, the loading module 600 may record information (e.g., specific coordinates) on where the object 142 has been loaded into the designated location 170. Such information may be helpful in later assisting an individual and/or other system in identifying the exact location of the object 142 within the storage area 100.

### Identifying Module

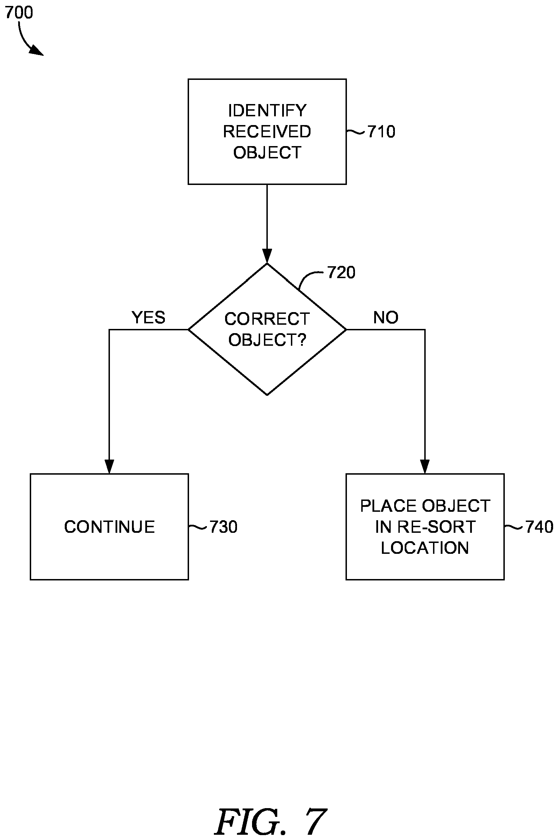

Turning now to FIG. 7, additional details are provided regarding an identifying module 700 for identifying an object 142 that has transitioned, or is available to transition, to the platform 111 of the robot 110 in accordance with various embodiments of the disclosure. For instance, the flow diagram shown in FIG. 7 may correspond to operations carried out, for example, by computing hardware 510 as described herein, as the computing hardware 510 executes the identifying module 700.

As previously noted, in particular embodiments, the loading module 600 may execute the identifying module 700 to identify the object 142. However, additionally, or alternatively, a different module may execute the identifying module 700 and/or the identifying module 700 may be configured to be executed as a stand-alone module.

The process involves the identifying module 700 identifying the object 142 that has transitioned, or is available to transition, to the platform 111 of the robot 110 in Operation 710. In particular embodiments, the system may employ one or more sensors 160 for reading indicia (e.g., text, a barcode, a quick response (QR) code, and/or the like) off of a label placed on the object 142 as the object 142 traverses the surface 121 of the loading mechanism 120 and/or once the object 142 has transition onto the platform 111 of the robot 110. The indicia may include, for example, an identification of the object (e.g., a tracking identifier for the object). In other embodiments, the object 142 may be coupled to a tracking tag, and the system may include one or more sensors 160 that comprise one or more tag readers that receive a signal from the tag that includes an identification of the object 142 as the object 142 traverses the surface 121 of the loading mechanism 120 and/or once the object 142 has transition onto the platform 111 of the robot 110. Accordingly, the one or more sensors 160 may provide the identification of the object 142 to the identifying module 700

In Operation 720, the identifying module 700 determines whether the object 142 is the correct object that is to be loaded into the designated location 170 found in the storage area 100. In particular embodiments, the identifying module 700 may access and/or receive information on the next object that is to be loaded into the storage area 100. For example, the loading module 600 may provide the identifying module 700 with information identifying the next object that is to be loaded into the storage area 100. The identifying module 700 may compare the identification of the object 142 that has transitioned, or is available to transition, to the platform 111 of the robot 110 with the information identifying the next object that is to be loaded into the storage area 100 to determine whether the object 142 that has transitioned, or is available to transition, is the correct object for loading next into the storage area 100.

If the object 142 is the correct object, then the identifying module 700 may continue the processing of the object 142 for placing the object 142 in the designated location 170 in Operation 730. However, if the object 142 is not the correct object, then the identifying module 700 may place the object 142 into a re-sort location in Operation 740. The re-sort location may be provided within the storage area 100 or in some other area that is accessible by the system for placing objects that have been mistakenly loaded onto the loading mechanism 120. The identifying module 700 may perform this operation to place the object 142 into the re-sort location by operating (e.g., instructing) the loading mechanism 120 and/or the robot 110 to do so. Once the object 142 has been placed in the re-sort location, the object 142 may be retrieved and correctly loaded into the storage area 100.

### Loading Mechanism Module

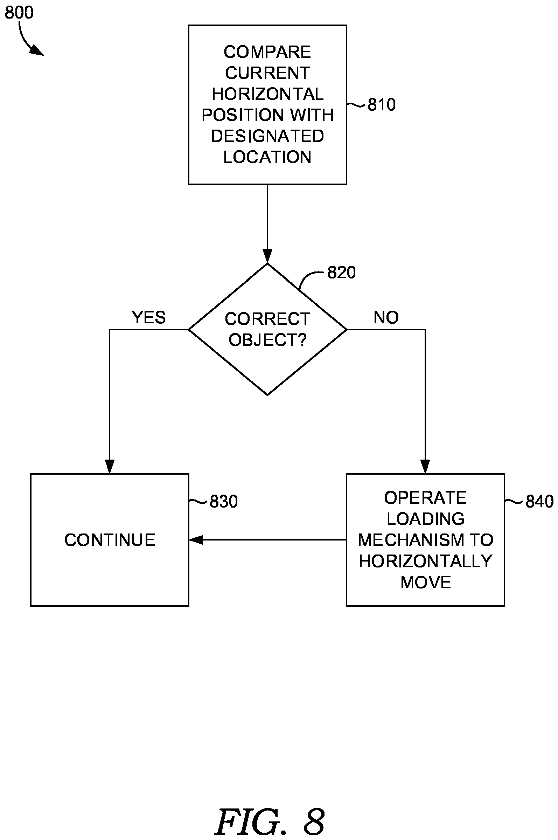

Turning now to FIG. 8, additional details are provided regarding a loading mechanism module 800 for moving the loading mechanism 120 to position the robot 110 horizontally at the designated location 170 in accordance with various embodiments of the disclosure. For instance, the flow diagram shown in FIG. 8 may correspond to operations carried out, for example, by computing hardware 510 as described herein, as the computing hardware 510 executes the loading mechanism module 800.

As previously noted, in particular embodiments, the loading module 600 may execute the loading mechanism module 800 to move the loading mechanism 120 and position the robot 110 horizontally at the designated location 170. However, additionally, or alternatively, a different module may execute the loading mechanism module 800 and/or the loading mechanism module 800 may be configured to be executed as a stand-alone module.

The process involves the loading mechanism module 800 comparing the current horizontal position of the robot 110 with the designated location 170 in Operation 810. For example, the loading module 600 may provide the loading mechanism module 800 with coordinates for the designated location 170, and the loading mechanism module 800 may compare the coordinates with the current horizontal position of the robot 110. Accordingly, in some embodiments, the loading mechanism module 800 may keep track of the current horizontal position of the robot 110 as the loading mechanism module 800 operates the loading mechanism 120 to move the loading mechanism 120, and correspondingly the robot 110, horizontally within the storage area 100. In other embodiments, the loading mechanism module 800 may utilize one or more of the sensors 150, 151, 152, 153 to identify a current horizontal position of the robot 110.

At Operation 820, if the loading mechanism module 800 determines that the current horizontal position of the robot 110 corresponds to the designated location 170, then the loading mechanism module 800 may continue the processing of the object 142 for placing the object 142 into the designated location in Operation 830. However, if the loading mechanism module 800 determines that the current horizontal position of the robot 110 does not correspond to the designated location 170, then the loading mechanism module 800 operates (e.g., instructs) the loading mechanism 120 to move to horizontally position the robot 110 at the designated location 170 in Operation 840.

For example, the loading mechanism module 800 may provide coordinates of the designated location 170 to the loading mechanism 120 (e.g., controller thereof), and the loading mechanism 120 may use the coordinates in moving within the storage area 100 to horizontally position the robot 110 at the designated location 170. Additionally, or alternatively, the loading mechanism module 800 may generate movement instructions based at least in part on the coordinates and send the movement instructions to the loading mechanism 120 to execute.

### Robot Module

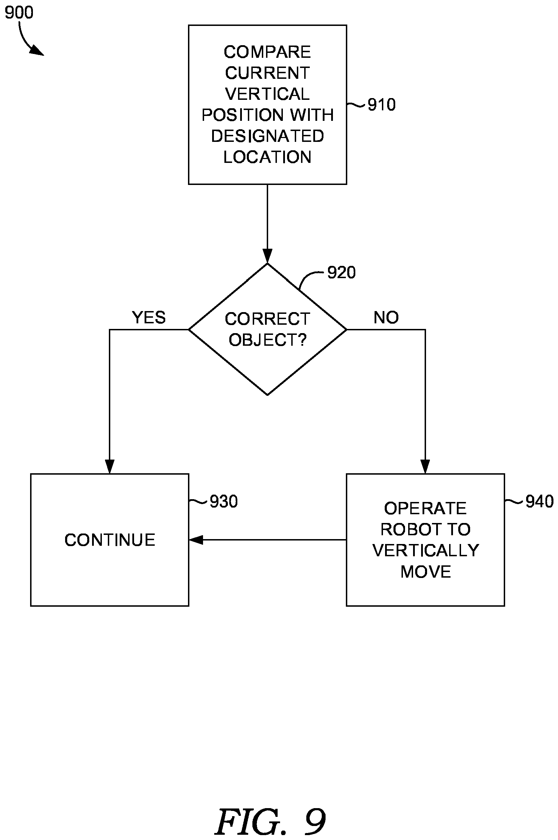

Turning now to FIG. 9, additional details are provided regarding a robot module 900 for moving the elevation mechanism 114 of the robot 110 to position the platform 111 of the robot 110 vertically at the designated location 170 in accordance with various embodiments of the disclosure. For instance, the flow diagram shown in FIG. 9 may correspond to operations carried out, for example, by computing hardware 510 as described herein, as the computing hardware 510 executes the robot module 900.

As previously noted, in particular embodiments, the loading module 600 may execute the robot module 900 to move the elevation mechanism 114 of the robot 110 and position the platform 111 of the robot 110 vertically at the designated location 170. However, additionally, or alternatively, a different module may execute the robot module 900 and/or the robot module 900 may be configured to be executed as a stand-alone module.

The process involves the robot module 900 comparing the current vertical position of the platform 111 of the robot 110 with the designated location 170 in Operation 910. For example, the loading module 600 may provide the robot module 900 with coordinates for the designated location 170, and the robot module 900 may compare the coordinates with the current vertical position of the platform 111 of the robot 110. Accordingly, in some embodiments, the robot module 900 may keep track of the current vertical position of the platform 111 of the robot 110 as the robot module 900 operates the elevation mechanism 114 to raise or lower the platform 111 vertically within the storage area 100. In other embodiments, the robot module 900 may utilize one or more of the sensors 150, 151, 152, 153 to identify a current vertical position of the platform 111 of the robot 110.

At Operation 920, if the robot module 900 determines that the current vertical position of the platform of the robot 110 corresponds to the designated location 170, then the robot module 900 may continue the processing of the object 142 for placing the object 142 into the designated location 170 in Operation 930. However, if the robot module 900 determines that the current vertical position of the platform of the robot 110 does not correspond to the designated location 170, then the robot module 900 operates (e.g., instructs) the elevation mechanism 114 of the robot 110 to vertically position the platform 111 of the robot 110 at the designated location in Operation 940.

For example, the robot module 900 may provide coordinates of the designated location 170 to the robot 110 (e.g., controller thereof), and the robot 110 may use the coordinates in operating the elevation mechanism 114 to move to vertically position the platform 111 of the robot 110 at the designated location 170. Additionally, or alternatively, the robot module 900 may generate movement instructions based at least in part on the coordinates and send the movement instructions to the robot 110 to execute.

### Object Placing Module

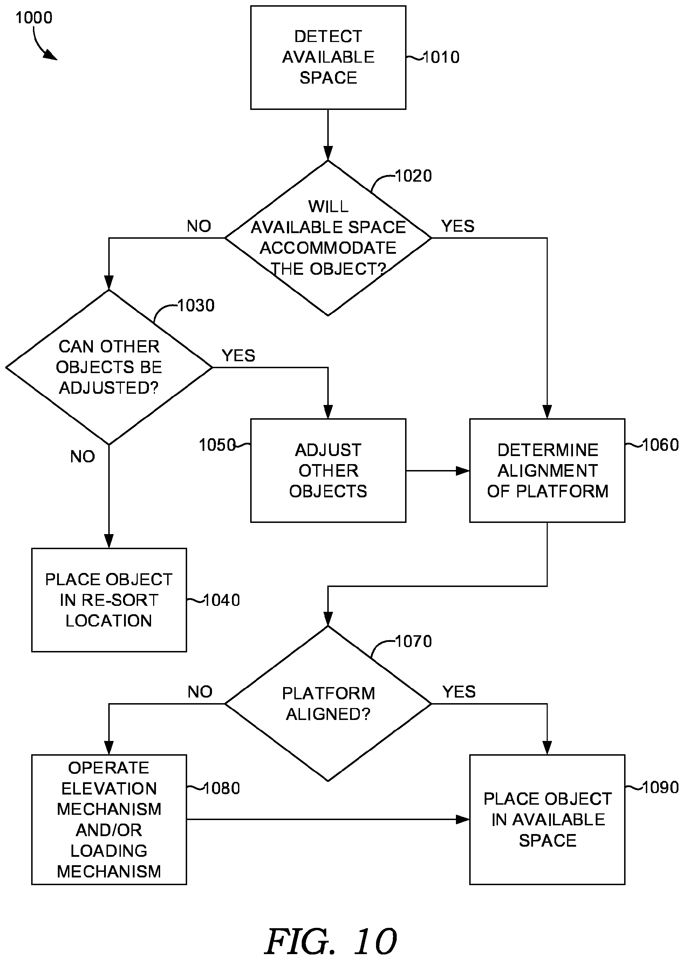

Turning now to FIG. 10, additional details are provided regarding an object placing module 1000 for transitioning an object 142 from the platform 111 of the robot 110 to the designated location 170 in accordance with various embodiments of the disclosure. For instance, the flow diagram shown in FIG. 10 may correspond to operations carried out, for example, by computing hardware 510 as described herein, as the computing hardware 510 executes the object placing module 1000.

As previously noted, in particular embodiments, the loading module 600 may execute the object placing module 1000 to transition the object 142 from the platform 111 of the robot 110 to the designated location 170. However, additionally, or alternatively, a different module may execute the object placing module 1000 and/or the object placing module 1000 may be configured to be executed as a stand-alone module.

The process involves the object placing module 1000 detecting the available space at the designated location 170 in Operation 1010. In particular embodiments, the object placing module 1000 performs this operation by initially utilizing one or more sensors to detect other objects 143, 144 that have already been placed and are proximate to the designated location 170. For example, the object placing module 1000 may utilize one or more optical sensors 150, 151, 152, 153 for collecting image data and processing the image data using a machine learning model, such as a convolutional neural network, in recognizing other objects 143, 144 that have been placed and are proximate to the designated location 170.

The object placing module 1000 may then determine the available space between the other objects 143, 144 that are adjacent to (e.g., that are on opposite sides of) the designated location 170 and determine whether the available space at the designated location 170 will accommodate the object 142 at Operation 1020. For example, the loading module 600 may provide the object placing module 1000 with the dimensions of the available space (e.g., height, width, and/or length) at the designated location 170, as well as the dimensions of the object 142 (e.g., height, width, and/or length). The object placing module 1000 may then compare the dimensions of the available space with the dimensions of the object to determine whether the available space will accommodate the object 142.

If the available space will not accommodate the object 142, then the object placing module 1000 determines whether the other objects 143, 144 may be adjusted (e.g., moved) to create an available space that will accommodate the object 142 at Operation 1030. For example, the object placing module 1000 may utilize one or more sensors to detect whether the other objects 143, 144 can be moved to create enough available space that will accommodate the object 142. As a specific example, the object placing module 1000 may utilize one or more sensors to detect whether space is available on either side of the other objects 143, 144 that can allow for the other objects 143, 144 to be moved to create enough available space that will accommodate the object 142. If not, then the object placing module 1000 places the object 142 into a re-sort location in Operation 1040.

However, if the other objects 143, 144 can be moved to create an available space that will accommodate the object 142, then the object placing module 1000 operates the gripper 115 of the robot 110 to adjust one or more of the other objects 143, 144 to create an available space that will accommodate the object 142 at Operation 1050. For example, the object placing module 1000 may provide coordinates of one or more of the other objects 143, 144, as detected by the sensor(s), to the robot 110 (e.g., controller thereof), and the robot 110 may use the coordinates in operating the gripper 115 to move one or more of the other objects 143, 144 and create the available space that will accommodate the object 142. Additionally, or alternatively, the object placing module 1000 may generate movement instructions based at least in part on the coordinates of one or more of the other objects 143, 144 and send the movement instructions to the robot 110 to execute.

Returning to Operation 1020, if the object placing module 1000 determines the available space will accommodate the object 142, then the object placing module 1000 determine the alignment of the platform 111 of the robot 110 with the available space in Operation 1060. For example, the object placing module 1000 may utilize one or more of the optical sensors 150, 151, 152, 153 to determine the alignment of the platform 111 with the available space.

At Operation 1070, the object placing module 1000 determines whether the platform 111 of the robot 110 is aligned with the available space at the designated location 170. If not, then the object placing module 1000 operates the elevation mechanism of the robot 110 and/or the loading mechanism 120 to align the platform 111 with the available space at Operation 1080. For example, the object placing module 1000 may provide coordinates of the available space to the robot 110 and/or loading mechanism 120 (e.g., controllers thereof), and the robot 110 and/or loading mechanism 120 may use the coordinates in operating to move vertically and/or horizontally to position the platform 111 at the available space. Additionally, or alternatively, the object placing module 1000 may generate movement instructions based at least in part on the coordinates and send the movement instructions to the robot 110 and/or loading mechanism 120 to execute.

Once the object placing module 1000 has aligned the platform with the available space, the object placing module 1000 places the object 142 into the available space at the designed location at Operation 1090. Here, the object placing module 1000 may operate the transition mechanism of the platform 111 to transition the object 142 into the available space at the designated location 170. In some embodiments, the robot 110 may comprise a ramp 112 that assists in transitioning the object 142 into the available space. Therefore, the object placing module 1000 may also operate the ramp 112, in conjunction with the transition mechanism, to transition the object 142 into the available space at the designated location 170.

Once the object placing module 1000 has transitioned the object 142 into the available space, in various embodiments, the object placing module 1000 may return various components of the system to a neutral position to prepare for a next object to be placed at a designated location within the storage area 100. For example, the object placing module 1000 may rotate the optical sensors 150, 151, 152, 153 to a position so that they can detect a next object transitioning onto the platform 111 of the robot 110. Additionally, or alternatively, the object placing module 1000 may engage one or more sensors 160 to identify a next object traversing the surface 121 of the loading mechanism 120 and/or is sitting on the platform 111. Further, the object placing module 1000 may stop operation of the transition mechanism of the platform 111 and/or move the ramp 112 back to a neutral position.

### Example Technical Platforms

Embodiments of the disclosure may utilize various components such as computing systems, hardware, and/or devices, storage systems, hardware, and/or devices, and/or the like, in performing various operations. Accordingly, these components involved in embodiments of the present disclosure may perform instructions that are implemented in various ways, including as computer program products that comprise articles of manufacture. Such computer program products may include one or more software components including, for example, software objects, methods, data structures, and/or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together such as, for example, in a particular directory, folder, or library. Software components may be static (e.g., pre-established, or fixed) or dynamic (e.g., created or modified at the time of execution).

A computer program product may include a computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such computer-readable storage media may include all non-transitory computer-readable media (including volatile and non-volatile media), but not any transitory computer-readable storage media.

In some embodiments, a non-volatile computer-readable storage medium may include a floppy disk, flexible disk, hard disk, solid-state storage (SSS) (e.g., a solid-state drive (SSD), solid state card (SSC), solid state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In some embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where various embodiments are described to use a computer-readable storage medium, other types of computer-readable storage media may be substituted for or used in addition to the computer-readable storage media described above.

Various embodiments of the present disclosure, and/or components thereof and/or that are utilized, may also be implemented as methods, apparatus, systems, computing devices, computing entities, and/or the like. As such, various embodiments of the present disclosure, and/or components thereof and/or that are utilized, may take the form of a data structure, apparatus, system, computing device, computing entity, and/or the like executing instructions stored on a computer-readable storage medium to perform certain steps or operations. Thus, various embodiments of the present disclosure, and/or components thereof and/or that are utilized, also may take the form of entirely hardware, entirely computer program product, and/or a combination of computer program product and hardware performing certain steps or operations.

Various embodiments of the present disclosure, and/or components thereof and/or that are utilized, are described herein with reference to block diagrams and flowchart illustrations. Thus, each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed one at a time. In some examples of embodiments, retrieval, loading, and/or execution may be performed in parallel such that multiple instructions are retrieved, loaded, and/or executed together. Thus, such embodiments can produce specially configured machines performing the steps or operations specified in the block diagrams and flowchart illustrations. Accordingly, the block diagrams and flowchart illustrations support various combinations of embodiments for performing the specified instructions, operations, or steps.

The logical operations described herein may be implemented (1) as a sequence of computer implemented acts or one or more program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, steps, structural devices, acts, or modules. These states, operations, steps, structural devices, acts, and modules may be implemented in software, in firmware, in special purpose digital logic, and any combination thereof. Greater or fewer operations may be performed than shown in the figures and described herein. These operations also may be performed in a different order than those described herein.

### Example Computing Hardware

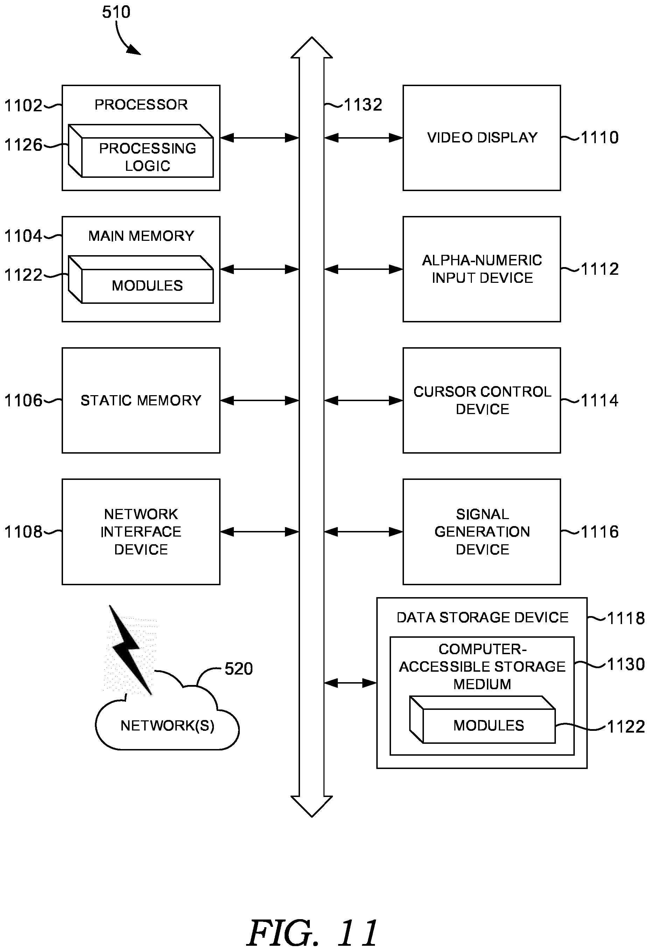

FIG. 11 illustrates a diagrammatic representation of an example of computing hardware 510 that can be used within the system as described herein. In various embodiments, the computing hardware 510 may be connected (e.g., networked) to other computing hardware via a wireless network, a LAN, an intranet, an extranet, and/or the Internet. The computing hardware 510 may operate in the capacity of a server, a client computer in a client-server network environment, a peer computer in a peer-to-peer (or distributed) network environment, and/or the like. The computing hardware 510 may be, for example, a desktop personal computer (PC), a tablet PC, a set-top box (STB), a Personal Digital Assistant (PDA), a cellular telephone, a web appliance, a server, a network router, a switch or bridge, or any other computing hardware capable of executing a set of instructions (sequential or otherwise) that specify actions to be taken by the computing hardware 510. Further, while the computing hardware 510 is shown as a single computing entity in FIG. 11, the term "computing hardware" shall also be taken to include any collection of computing entities that individually or jointly execute a set (or multiple sets) of instructions to perform any one or more of the methodologies/functionalities described herein.

The computing hardware 510 includes a processing device 1102, a main memory 1104 (e.g., read-only memory (ROM), flash memory, dynamic random access memory (DRAM) such as synchronous DRAM (SDRAM) or Rambus DRAM (RDRAM), etc.), a static memory 1106 (e.g., flash memory, static random access memory (SRAM), etc.), and a data storage device 1118, which communicate with each other via a bus 1132.

The processing device 1102 represents one or more general-purpose processing devices such as a microprocessor, a central processing unit, and/or the like. More particularly, the processing device 1102 may be a complex instruction set computing (CISC) microprocessor, reduced instruction set computing (RISC) microprocessor, very long instruction word (VLIW) microprocessor, or processor implementing other instruction sets, or processors implementing a combination of instruction sets. The processing device 1102 may also be one or more special-purpose processing devices such as an application specific integrated circuit (ASIC), a field programmable gate array (FPGA), a digital signal processor (DSP), network processor, or the like. The processing device 1102 may be configured to execute processing logic 1126 for performing various operations, steps, and/or the like as discussed herein.

The computing hardware 510 may further include a network interface device 1108. The computing hardware 510 also may include a video display unit 1110 (e.g., a liquid crystal display (LCD) or a cathode ray tube (CRT)), an alphanumeric input device 1112 (e.g., a keyboard), a cursor control device 1114 (e.g., a mouse), and a signal generation device 1116 (e.g., a speaker).

The data storage device 1118 may include a non-transitory computer-accessible storage medium 1130 (also known as a non-transitory computer-readable storage medium or a non-transitory computer-readable medium) on which is stored one or more modules 1122 (e.g., sets of instructions) as described herein. The modules 1122 may also reside, completely or at least partially, within the main memory 1104 and/or within the processing device 1102 during execution thereof by the computing hardware 510. In this capacity, the main memory 1104 and the processing device 1102 can also constitute computer-accessible storage media. The modules 1122 may further be transmitted or received over one or more networks 520 via a network interface device 1108.

While the computer-accessible storage medium 1130 is shown in FIG. 11 to be a single medium, the term "computer-accessible storage medium" should be understood to include a single medium or multiple media (e.g., a centralized or distributed database, and/or associated caches and servers) that store the one or more sets of instructions. The term "computer-accessible storage medium" should also be understood to include any medium that is capable of storing, encoding or carrying a module (e.g., a set of instructions) for execution by the computing hardware 510 and that cause the computing hardware 510 to perform any one or more of the methodologies/functionalities of the present disclosure. The term "computer-accessible storage medium" should accordingly be understood to include, but not be limited to, solid-state memories, optical and magnetic media, etc.

Embodiment 1: A system comprising: a robot comprising: a platform for supporting an object, the platform comprising a transition mechanism for transitioning the object to a designated location located in a storage area, and an elevation mechanism for moving the platform in a vertical direction; a loading mechanism comprising: a first end, a second end adjacent to the robot, and a surface for traversing the object from the first end to the second end; one or more sensors; and computing hardware communicatively coupled to the robot, the loading mechanism, and the one or more sensors, wherein the object traverses the surface of the loading mechanism onto the platform of the robot, and the computing hardware is configured to perform operations comprising: identifying, via at least one of the one or more sensors, a presence of the object on the platform, retrieving information that comprises the designated location located in the storage area, operating, based at least in part on the information on the designated location, the loading mechanism to move in the storage area to position the robot horizontally at the designated location, operating, based at least in part on the information on the designated location, the elevation mechanism to position the platform vertically at the designated location, and operating the transition mechanism to place the object into the designated location.

Embodiment 2: The system of embodiment 1, wherein the robot further comprises a ramp coupled to the platform that is configured to move to enable the object to transition from the platform to the designated location.

Embodiment 3: The system of embodiment 1 or 2, wherein the information further comprises an identifier for the object, at least one of the one or more sensors detects an identification of the object, and the operations further comprise: receiving the identification of the object, and comparing the identification of the object with the identifier for the object to verify the object is correct for placing in the designated location.

Embodiment 4: The system of any of embodiments 1 to 3, wherein the loading mechanism comprises a release mechanism, and the operations further comprise operating the release mechanism to release the object onto the platform.

Embodiment 5: The system of any of embodiments 1 to 4, wherein the information on the designated location comprises coordinates, and operating, based at least in part on the information on the designated location, the loading mechanism to move in the storage area to position the robot horizontally at the designated location involves: comparing the coordinates to a current horizontal position of the robot in the storage area, determining, based at least in part on comparing the coordinates to the current horizontal position, that the current horizontal position of the robot is not at the designated location, and responsive to determining that the current horizontal position of the robot is not at the designated location, instructing, based at least in part on the coordinates, the loading mechanism to move in the storage area to position the robot horizontally at the designated location.

Embodiment 6: The system of any of embodiments 1 to 5, wherein the information on the designated location comprises coordinates, and operating, based at least in part on the information on the designated location, the elevation mechanism to position the platform vertically at the designated location involves: comparing the coordinates to a current vertical position of the platform, determining, based at least in part on comparing the coordinates to the current vertical position, that the current vertical position of the platform is not at the designated location, and responsive to determining that the current vertical position of the platform is not at the designated location, instructing, based at least in part on the coordinates, the elevation mechanism to move to position the platform vertically at the designated location.

Embodiment 7: The system of any of embodiments 1 to 6, wherein the information further comprises dimensions of the object, and the operations further comprise: identifying an available space at the designated location, and determining, based at least in part on the dimensions of the object, that the available space can accommodate the object.

Embodiment 8: The system of embodiment 7, wherein at least one sensor of the one or more sensors detects objects that are proximate the designated location, and detecting the available space at the designated location involves: receiving information on the objects that are proximate the designated location; and determining a space between the objects as the available space for placing the object at the designated location.

Embodiment 9: The system of embodiment 8, wherein the robot further comprises a gripper, and the operations further comprise instructing, based at least in part on the available space, the robot to actuate the gripper to move one or more of the objects that are proximate the designated location to create a larger space for the available space.

Embodiment 10: The system of embodiment 7, wherein the operations further comprise instructing, based at least in part on the available space, at least one of the elevation mechanism to move vertically or the loading mechanism to move horizontally to align the platform with the available space.

Embodiment 11: The system of any of embodiments 1 to 10, wherein the operations further comprise recording a confirmation of placing the object at the designated location and coordinates of a space where the object was placed at the designated location.

Embodiment 12: A method comprising: retrieving, via computing hardware communicatively coupled to a robot, a loading mechanism, and one or more sensors, information that comprises a designated location located in a storage area where an object is to be placed; detecting, via at least one of the one or more sensors, a presence of the object on a platform supporting the object, wherein the robot comprises the platform and the object has traversed a surface of the loading mechanism from a first end of the loading mechanism to a second end of the loading mechanism that is adjacent the robot; operating, via the computing hardware and based at least in part on the information on the designated location, the loading mechanism to move in a horizontal direction in the storage area to position the robot horizontally at the designated location; operating, via the computing hardware and based at least in part on the information on the designated location, an elevation mechanism to move the platform of the robot in a vertical direction to position the platform vertically at the designated location; and operating, via the computing hardware, a transition mechanism of the platform to transition the object into the designated location.

Embodiment 13: The method of embodiment 12, wherein the at least one of the one or more sensors comprises at least one of a pressure sensor or an optical sensor that detects the presence of the object on the platform.

Embodiment 14: The method of embodiment 12 or 13, wherein operating the transition mechanism to transition the object into the designated location involves forcing the object, via the transition mechanism, against a ramp coupled to the platform that is configured to move about a hinge to enable the object to transition from the platform to the designated location.

Embodiment 15: The method of any of embodiments 12 to 14, wherein the information further comprises an identifier for the object, and the method further comprises: detecting, via a first sensor of the one or more sensors, an identification of the object; and comparing, via the computing hardware, the identification of the object with the identifier for the object to verify the object is correct for placing in the designated location.

Embodiment 16: The method of embodiment 15, wherein the object is coupled to a radio frequency identification (RFID) tag and the first sensor comprises a RFID tag reader, and detecting the identification of the object comprises receiving, via the RFID tag reader, a response signal to an interrogation signal that comprises the identification of the object.

Embodiment 17: The method of embodiment 15, wherein the object comprises a label displaying indicia and the first sensor comprises an optical reader, and detecting the identification of the object comprises reading, via the optical reader, the indicia from the label that comprises the identification of the object.

Embodiment 18: The method of any of embodiments 12 to 17, wherein the loading mechanism comprises a release mechanism, and the method further comprises operating, via the computing hardware, the release mechanism to release the object onto the platform.

Embodiment 19: The method of any of embodiments 12 to 18, wherein the information on the designated location comprises coordinates, and operating the loading mechanism to move in the horizontal direction in the storage area to position the robot horizontally at the designated location involves: comparing the coordinates to a current horizontal position of the robot in the storage area; determining, based at least in part on comparing the coordinates to the current horizontal position, that the current horizontal position of the robot is not at the designated location; and responsive to determining that the current horizontal position of the robot is not at the designated location, instructing, based at least in part on the coordinates, the loading mechanism to move in the storage area to position the robot horizontally at the designated location.

Embodiment 20: The method of any of embodiments 12 to 18, wherein the information on the designated location comprises coordinates, and operating the elevation mechanism to move the platform of the robot in the vertical direction to position the platform vertically at the designated location involves: comparing the coordinates to a current vertical position of the platform; determining, based at least in part on comparing the coordinates to the current vertical position, that the current vertical position of the platform is not at the designated location; and responsive to determining that the current vertical position of the platform is not at the designated location, instructing, based at least in part on the coordinates, the elevation mechanism to move to position the platform vertically at the designated location.

Embodiment 21: The method of any of embodiments 12 to 20, wherein the information further comprises dimensions of the object, and the method further comprises: detecting, via at least one of the one or more sensors, an available space at the designated location; and determining, via the computing hardware and based at least in part on the dimensions of the object, that the available space can accommodate the object.

Embodiment 22: The method of embodiment 21, wherein detecting the available space at the designated location involves: detecting objects that are proximate the designated location; and determining a space between the objects as the available space for placing the object at the designated location.

Embodiment 23: The method of embodiment 22, wherein the robot further comprises a gripper, and the method further comprises operating, via the computing hardware and based at least in part on the available space, the robot to actuate the gripper to move one or more of the objects that are proximate the designated location to create a larger space for the available space.

Embodiment 24: The method of embodiment 21, further comprising operating, via the computing hardware and based at least in part on the available space, at least one of the elevation mechanism to move vertically or the loading mechanism to move horizontally to align the platform with the available space.

Embodiment 25: The method of any of embodiments 12 to 24, further comprising recording, via the computing hardware, a confirmation of placing the object at the designated location and coordinates of a space where the object was placed at the designated location.

Embodiment 26: A computer-readable medium storing computer-executable instructions that, when executed by computing hardware communicatively coupled to a robot, a loading mechanism, and one or more sensors, configure the computing hardware to perform operations comprising: retrieving information that comprises a designated location located in a storage area where an object is to be placed; receiving, via at least one of the one or more sensors, a detection of a presence of the object on a platform supporting the object, wherein the robot comprises the platform and the object has traversed a surface of the loading mechanism from a first end of the loading mechanism to a second end of the loading mechanism that is adjacent the robot; operating, based at least in part on the information on the designated location, the loading mechanism to move in a horizontal direction in the storage area to position the robot horizontally at the designated location; operating, based at least in part on the information on the designated location, an elevation mechanism to move the platform of the robot in a vertical direction to position the platform vertically at the designated location; and operating a transition mechanism of the platform to transition the object into the designated location.

Embodiment 27: The computer-readable medium of embodiment 26, wherein the at least one of the one or more sensors comprises at least one of a pressure sensor or an optical sensor that detects the presence of the object on the platform.

Embodiment 28: The computer-readable medium of embodiment 26 or 27, wherein operating the transition mechanism to transition the object into the designated location involves forcing the object, via the transition mechanism, against a ramp coupled to the platform that is configured to move about a hinge to enable the object to transition from the platform to the designated location.

Embodiment 29: The computer-readable medium of any of embodiments 26 to 28, wherein the information further comprises an identifier for the object, and the operations further comprise: detecting, via a first sensor of the one or more sensors, an identification of the object; and comparing, via the computing hardware, the identification of the object with the identifier for the object to verify the object is correct for placing in the designated location.

Embodiment 30: The computer-readable medium of any of embodiments 26 to 29, wherein the loading mechanism comprises a release mechanism, and the operations further comprise operating the release mechanism to release the object onto the platform.

Embodiment 31: The computer-readable medium of any of embodiments 26 to 30, wherein the information on the designated location comprises coordinates, and operating the loading mechanism to move in the horizontal direction in the storage area to position the robot horizontally at the designated location involves: comparing the coordinates to a current horizontal position of the robot in the storage area; determining, based at least in part on comparing the coordinates to the current horizontal position, that the current horizontal position of the robot is not at the designated location; and responsive to determining that the current horizontal position of the robot is not at the designated location, instructing, based at least in part on the coordinates, the loading mechanism to move in the storage area to position the robot horizontally at the designated location.

Embodiment 32: The computer-readable medium of any of embodiments 26 to 31, wherein the information on the designated location comprises coordinates, and operating the elevation mechanism to move the platform of the robot in the vertical direction to position the platform vertically at the designated location involves: comparing the coordinates to a current vertical position of the platform; determining, based at least in part on comparing the coordinates to the current vertical position, that the current vertical position of the platform is not at the designated location; and responsive to determining that the current vertical position of the platform is not at the designated location, instructing, based at least in part on the coordinates, the elevation mechanism to move to position the platform vertically at the designated location.

Embodiment 33: The computer-readable medium of any of embodiments 26 to 32, wherein the information further comprises dimensions of the object, and the operations further comprise: receiving, via at least one of the one or more sensors, an available space at the designated location; and determining, based at least in part on the dimensions of the object, that the available space can accommodate the object.

Embodiment 34: The computer-readable medium of embodiment 33, wherein the robot further comprises a gripper, and the operations further comprise operating, based at least in part on the available space, the robot to actuate the gripper to move one or more objects that are proximate the designated location to create a larger space for the available space.

Embodiment 35: The computer-readable medium of embodiment 33, when the operations further comprise operating, based at least in part on the available space, at least one of the elevation mechanism to move vertically or the loading mechanism to move horizontally to align the platform with the available space.

Embodiment 36: The computer-readable medium of any of embodiments 26 to 35, wherein the operations further comprise recording a confirmation of placing the object at the designated location and coordinates of a space where the object was placed at the designated location.

### CONCLUSION

While this specification contains many specific aspect details, these should not be construed as limitations on the scope of any invention or of what may be claimed, but rather as descriptions of features that may be specific to particular embodiments of particular inventions. Certain features that are described in this specification in the context of separate embodiments also may be implemented in combination in a single embodiment. Conversely, various features that are described in the context of a single embodiment also may be implemented in multiple embodiments separately or in any suitable sub-combination. Moreover, although features may be described above as acting in certain combinations and even initially claimed as such, one or more features from a claimed combination may in some cases be excised from the combination, and the claimed combination may be a sub-combination or variation of a sub-combination.

Similarly, while operations are described in a particular order, this should not be understood as requiring that such operations be performed in the particular order described or in sequential order, or that all described operations be performed, to achieve desirable results. In certain circumstances, multitasking and parallel processing may be advantageous. Moreover, the separation of various components in the various embodiments described above should not be understood as requiring such separation in all embodiments, and the described program components (e.g., modules) and systems may be integrated together in a single software product or packaged into multiple software products.

Many modifications and other embodiments of the disclosure will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for the purposes of limitation.

In some embodiments, this disclosure may include the language "at least one of [element A] or [element B]." This language may refer to one or more of the elements. For example, "at least one of A or B" may refer to "A," "B," or "A and B." In other words, "at least one of A or B" may refer to "at least one of A and at least one of B," "at least one of A or B," or "A and B." In some embodiments, this disclosure may include the language, for example "[element A], [element B], and/or [element C]." This language may refer to either of the element or any combination thereof. In other words, "A, B, and/or C" may refer to "A," "B," "C," "A and B," "A and C," "B and C," or "A, B, and C."

The subject matter of this disclosure has been described in relation to particular embodiments, which are intended in all respects to be illustrative rather than restrictive. Alternative embodiments will become apparent to those of ordinary skill in the art to which the present subject matter pertains without departing from the scope hereof. Different combinations of elements, as well as use of elements not shown, are also possible and contemplated.

## Claims

1. A system comprising:
a robot (110) comprising:
a platform (111) for supporting an object (142), the platform (111) comprising a transition mechanism for transitioning the object (142) to a designated location (170) located in a storage area (100), and
an elevation mechanism (114) for moving the platform (111) in a vertical direction;
a loading mechanism (120) comprising:
a first end,
a second end adjacent to the robot (110), and
a surface (121) for traversing the object (142) from the first end to the second end; one or more sensors (150, 151, 152, 153); and
computing hardware (510) communicatively coupled to the robot (110), the loading mechanism (120), and the one or more sensors (150, 151, 152, 153), wherein the object (142) traverses the surface (121) of the loading mechanism (120) onto the platform (111) of the robot (110), and the computing hardware (510) is configured to perform operations comprising:
identifying, via at least one of the one or more sensors (150, 151, 152, 153), a presence of the object (142) on the platform (111),
retrieving information that comprises the designated location (170) located in the storage area (100),
operating, based at least in part on the information on the designated location (170), the loading mechanism (120) to move in the storage area (100) to position the robot (110) horizontally at the designated location (170),
operating, based at least in part on the information on the designated location (170), the elevation mechanism (114) to position the platform (111) vertically at the designated location (170), and
operating the transition mechanism to place the object (142) into the designated location (170).

2. The system of claim 1, wherein the robot (110) further comprises a ramp (112) coupled to the platform (111) that is configured to move to enable the object (142) to transition from the platform (111) to the designated location (170).

3. The system of claim 1 or 2, wherein the information further comprises an identifier for the object (142), at least one of the one or more sensors (150, 151, 152, 153) detects an identification of the object (142), and the operations further comprise:
receiving the identification of the object (142), and
comparing the identification of the object (142) with the identifier for the object (142) to verify the object (142) is correct for placing in the designated location (170).

4. The system of any of claims 1 to 3, wherein the information on the designated location (170) comprises coordinates, and operating, based at least in part on the information on the designated location (170), the loading mechanism (120) to move in the storage area (100) to position the robot (110) horizontally at the designated location (170) involves:
comparing the coordinates to a current horizontal position of the robot (110) in the storage area (100),
determining, based at least in part on comparing the coordinates to the current horizontal position, that the current horizontal position of the robot (110) is not at the designated location (170), and
responsive to determining that the current horizontal position of the robot (110) is not at the designated location (170), instructing, based at least in part on the coordinates, the loading mechanism (120) to move in the storage area (100) to position the robot (110) horizontally at the designated location (170).

5. The system of any of claims 1 to 4, wherein the information on the designated location comprises coordinates, and operating, based at least in part on the information on the designated location (170), the elevation mechanism (114) to position the platform (111) vertically at the designated location (170) involves:
comparing the coordinates to a current vertical position of the platform (111), determining, based at least in part on comparing the coordinates to the current vertical position, that the current vertical position of the platform (111) is not at the designated location (170), and
responsive to determining that the current vertical position of the platform (111) is not at the designated location (170), instructing, based at least in part on the coordinates, the elevation mechanism (114) to move to position the platform (111) vertically at the designated location (170).

6. The system of any of claims 1 to 5, wherein the information further comprises dimensions of the object (142), and the operations further comprise:
identifying an available space at the designated location (170), and
determining, based at least in part on the dimensions of the object (142), that the available space can accommodate the object (142).

7. The system of claim 6, wherein at least one sensor of the one or more sensors (150, 151, 152, 153) detects objects (143, 144) that are proximate the designated location (170), and detecting the available space at the designated location (170) involves:
receiving information on the objects (143, 144) that are proximate the designated location (170); and
determining a space between the objects (143, 144) as the available space for placing the object (142) at the designated location (170).

8. The system of claim 7, wherein the robot (110) further comprises a gripper (115), and the operations further comprise instructing, based at least in part on the available space, the robot (110) to actuate the gripper (115) to move one or more of the objects (143, 144) that are proximate the designated location (170) to create a larger space for the available space.

9. The system of claim 7, wherein the operations further comprise instructing, based at least in part on the available space, at least one of the elevation mechanism (114) to move vertically or the loading mechanism (120) to move horizontally to align the platform (111) with the available space.

10. A method comprising:
retrieving, via computing hardware (510) communicatively coupled to a robot (110), a loading mechanism (120), and one or more sensors (150, 151, 152, 153), information that comprises a designated location (170) located in a storage area (100) where an object (142) is to be placed;
detecting, via at least one of the one or more sensors (150, 151, 152, 153), a presence of the object (142) on a platform (111) supporting the object (142), wherein the robot (110) comprises the platform (111) and the object (142) has traversed a surface (121) of the loading mechanism (120) from a first end of the loading mechanism (120) to a second end of the loading mechanism (120) that is adjacent the robot (110);
operating, via the computing hardware (510) and based at least in part on the information on the designated location (170), the loading mechanism (120) to move in a horizontal direction in the storage area (100) to position the robot (110) horizontally at the designated location (170);
operating, via the computing hardware (510) and based at least in part on the information on the designated location(170) , an elevation mechanism (114) to move the platform (111) of the robot (110) in a vertical direction to position the platform (111) vertically at the designated location(170) ; and
operating, via the computing hardware (510), a transition mechanism of the platform (111) to transition the object (142) into the designated location (170).

11. The method of claim 10, wherein the information on the designated location (170) comprises coordinates, and operating the loading mechanism (120) to move in the horizontal direction in the storage area (100) to position the robot (110) horizontally at the designated location (170) involves:
comparing the coordinates to a current horizontal position of the robot (110) in the storage area (100);
determining, based at least in part on comparing the coordinates to the current horizontal position, that the current horizontal position of the robot (110) is not at the designated location (170); and
responsive to determining that the current horizontal position of the robot (110) is not at the designated location (170), instructing, based at least in part on the coordinates, the loading mechanism (120) to move in the storage area (100) to position the robot (110) horizontally at the designated location (170).

12. The method of claim 10 or 11, wherein the information on the designated location (170) comprises coordinates, and operating the elevation mechanism (114) to move the platform (111) of the robot (110) in the vertical direction to position the platform (111) vertically at the designated location (170) involves:
comparing the coordinates to a current vertical position of the platform (111);
determining, based at least in part on comparing the coordinates to the current vertical position, that the current vertical position of the platform (111) is not at the designated location (170); and
responsive to determining that the current vertical position of the platform (111) is not at the designated location (170), instructing, based at least in part on the coordinates, the elevation mechanism (114)to move to position the platform (111) vertically at the designated location (170).

13. A computer-readable medium storing computer-executable instructions that, when executed by computing hardware (510) communicatively coupled to a robot (110), a loading mechanism (120), and one or more sensors (150, 151, 152, 153), configure the computing hardware (510) to perform operations comprising:
retrieving information that comprises a designated location (170) located in a storage area (100) where an object (142) is to be placed;
receiving, via at least one of the one or more sensors (150, 151, 152, 153), a detection of a presence of the object (142) on a platform (111) supporting the object (142), wherein the robot (110) comprises the platform (111) and the object (142) has traversed a surface (121) of the loading mechanism (120) from a first end of the loading mechanism (120) to a second end of the loading mechanism (120) that is adjacent the robot (110);
operating, based at least in part on the information on the designated location (170), the loading mechanism (120) to move in a horizontal direction in the storage area (100) to position the robot (110) horizontally at the designated location (170);
operating, based at least in part on the information on the designated location (170), an elevation mechanism (114) to move the platform (111) of the robot (110) in a vertical direction to position the platform (111) vertically at the designated location (170); and
operating a transition mechanism of the platform (111) to transition the object (142) into the designated location (170).

14. The computer-readable medium of claim 13, wherein the information on the designated location (170) comprises coordinates, and operating the loading mechanism (120) to move in the horizontal direction in the storage area (100) to position the robot (110) horizontally at the designated location (170) involves:
comparing the coordinates to a current horizontal position of the robot (110) in the storage area (100);
determining, based at least in part on comparing the coordinates to the current horizontal position, that the current horizontal position of the robot (110) is not at the designated location (170); and
responsive to determining that the current horizontal position of the robot (110) is not at the designated location (170), instructing, based at least in part on the coordinates, the loading mechanism (120) to move in the storage area (100) to position the robot (110) horizontally at the designated location (170).

15. The computer-readable medium of claim 13 or 14, wherein the information on the designated location (170) comprises coordinates, and operating the elevation mechanism (114) to move the platform (111) of the robot (110) in the vertical direction to position the platform (111) vertically at the designated location (170) involves:
comparing the coordinates to a current vertical position of the platform (111);
determining, based at least in part on comparing the coordinates to the current vertical position, that the current vertical position of the platform (111) is not at the designated location (170); and
responsive to determining that the current vertical position of the platform (111) is not at the designated location (170), instructing, based at least in part on the coordinates, the elevation mechanism (114) to move to position the platform (111) vertically at the designated location (170).
